# EUROPEAN PATENT SPECIFICATION

(11) **EP 4 391 156 B1**
(45) Date of publication and mention of the grant of the patent: **07.10.2026**
(21) Application number: 23767207.6
(22) Date of filing: 10.03.2023
(51) Int. Cl.: H01M 10/6551, H01M 10/6567, H01M 10/6556, H01M 50/211, H01M 50/262, H01M 50/204, H01M 10/653, H01M 10/613, H01M 10/647, H01M 10/625, H01M 10/6554, H01M 50/209

(54) **BATTERY PACK AND DEVICE INCLUDING THE SAME**
BATTERIEPACK UND VORRICHTUNG DAMIT
BLOC-BATTERIE ET DISPOSITIF LA COMPRENANT

(30) Priority: 10.03.2022 KR 20220030046; 09.03.2023 KR 20230031250
(43) Date of publication of application: 26.06.2024
(73) Proprietor: LG Energy Solution, Ltd., Seoul 07335 (KR)
(72) Inventor: SEO, Sung Won, Daejeon 34122 (KR); YUN, Hyeonki, Daejeon 34122 (KR); JU, Eunah, Daejeon 34122 (KR); TANNENBERGER, Günter, 85123 Pobenhausen (DE); HARASZTOSI, Uwe, 74172 Neckarsulm (DE)
(74) Representative: Plasseraud IP
(86) International application number: PCT/KR2023/003319
(87) International publication number: WO 2023/172106

(56) References cited:
- CN-A- 102 856 516
- CN-A- 110 233 216
- CN-A- 111 213 253
- CN-U- 212 209 571
- CN-U- 212 209 571
- CN-U- 214 898 571
- GB-A- 2 593 187
- KR-A- 20090 010 393
- KR-A- 20200 086 170

## Description

### [TECHNICAL FIELD]

### Cross Citation with Related Application(s)

This application claims the benefit of Korean Patent Application No. 10-2022-0030046 filed on March 10, 2022 and Korean Patent Application No. 10-2023-0031250 filed on March 9, 2023 in the Korean Intellectual Property Office.

The present disclosure relates to a battery pack and a device including the same, and more particularly, to a battery pack improved in cooling performance and a device including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery mainly uses a lithium-based oxide and a carbonaceous material as a positive electrode active material and a negative electrode active material, respectively. The lithium secondary battery includes an electrode assembly in which a positive electrode plate and a negative electrode plate, each being coated with the positive electrode active material and the negative electrode active material, are disposed with a separator being interposed between them, and a battery case which seals and accommodates the electrode assembly together with an electrolyte solution.

Generally, the lithium secondary battery may be classified into a can-type secondary battery in which the electrode assembly is embedded in a metal can, and a pouch-type secondary battery in which the electrode assembly is embedded in a pouch of an aluminum laminate sheet, depending on the shape of the exterior part.

In the case of a secondary battery used for small-sized devices, two to three battery cells are disposed, but in the case of a secondary battery used for a medium- and large-sized device such as automobiles, a battery module in which a large number of battery cells are electrically connected is used. In such a battery module, a large number of battery cells are connected to each other in series or parallel to form a cell assembly, thereby improving capacity and output. Further, one or more battery modules can be mounted together with various control and protection systems such as a BDU(battery disconnect unit), a BMS (battery management system) and a cooling system to form a battery pack.

Further, when configuring a battery pack, it is common to configure a battery module first and then add various control and protection systems such as a BDU (Battery Disconnect Unit), a BMS (Battery Management System), a cooling system, or the like to the battery module to configure a battery pack. In the case of a conventional battery pack, it is manufactured by disposing battery modules in a housing structure such as a pack tray, and such a battery pack is mounted on a vehicle or the like.

When a secondary battery is heated over a proper temperature, the performance of the secondary battery may deteriorate, and in the worst case, there is also a risk of an explosion or ignition. In particular, a plurality of secondary batteries, that is, a battery module or a battery pack having battery cells can accumulate the heat emitted from the plurality of battery cells in a narrow space, which may raise the temperature of the battery module quickly and severely. In other words, a battery module including a large number of battery cells, and a battery pack equipped with such a battery module can obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases.

Moreover, if a battery module is included in a battery pack for a vehicle, the battery module may be frequently exposed to direct sunlight and may be placed under high-temperature conditions, for example, in summer or in a desert. Therefore, when configuring a battery module or a battery pack, it may be very important to ensure stable and effective cooling performance. Cooling methods of battery modules or battery packs can be largely classified into a water cooling method using a coolant such as cooling water and an air cooling method using cooling wind. Among them, water-cooled type cooling has excellent cooling performance and can effectively cool high heat generated from large-capacity battery modules or battery packs.

In recent years, there is an increasing need for a battery pack structure that can increase energy density and reduce overall weight by reducing weight, and at the same time, effectively dispose a water-cooled type structure to maximize cooling performance.

GB 2593187A, CN 212209571U and CN 102856516A, all provide for a battery pack which has a heat sink.

### [DETAILED DESCRIPTION OF THE INVENTION]

### [Technical Problem]

It is an object of the present disclosure to provide a battery pack that can increase energy density, reduce weight, and improve cooling performance in a limited space, and a device including the same.

However, the problem to be solved by embodiments of the present disclosure is not limited to the above-described problems, and can be variously expanded within the scope of the technical idea included in the present disclosure.

### [Technical Solution]

According to the present disclosure, there is provided a battery pack according to claim 1.

According to an embodiment of the present disclosure, the connection member is provided independently on at least either one of the upper side or the lower side of the battery cell stack.

The battery module may be formed in a plurality of numbers, and at least two battery modules may be disposed along a stacking direction in which the battery cells are stacked.

The cooling part may pass one side of the connection member of one battery module, and pass one side of the connection member of the other battery module adjacent to the one battery module.

The cooling part may include a first cooling part and a second cooling part that extend along one direction. The upper heat sink and the lower heat sink may each further comprise an inflow part that is connected to the first cooling part and introduces a coolant, a discharge part that is connected to the second cooling part and discharges the coolant, and a connection part that connects the first cooling part and the second cooling part.

The coolant may flow along the inflow part, the first cooling part, the connection part, the second cooling part and the discharge part, and form a circulation structure.

The one direction may be a direction parallel to the stacking direction in which the battery cells are stacked.

Based on the battery module, the inflow part and the discharge part may be positioned on the same side, and the connection part may be positioned on an opposite side of the inflow part and the discharge part.

The battery module may further comprise a thermal resin layer positioned between the cooling part and the battery cell stack.

The thermal resin layer may include at least either one of an upper thermal resin layer positioned between the cooling part of the upper heat sink and the battery cell stack, or a lower thermal resin layer positioned between the cooling part of the lower heat sink and the battery cell stack.

The first and second side plates may each include a support part that supports the outermost battery cell of the battery cell stack and is disposed so as to be perpendicular to the bottom part of the pack tray, and a fixing part that protrudes in a direction perpendicular to one surface of the support part, and the fixing part may be fixed to the pack tray.

The pack tray may include a mounting beam disposed on an upper surface of the bottom part of the pack tray, and the fixing part may be fixed to the mounting beam.

The battery cell stack may include a first battery cell stack and a second battery cell stack, and the first battery cell stack and the second battery cell stack may be disposed to be spaced apart from each other along a direction perpendicular to a stacking direction in which the battery cells are stacked.

The first side plate may extend so as to cover both one side surface of the first battery cell stack and one side surface of the second battery cell stack. The second side plate may extend so as to cover both the other side surface of the first battery cell stack and the other side surface of the second battery cell stack.

The battery module may further comprise an insulating plate positioned between the first battery cell stack and the second battery cell stack.

The upper heat sink and the lower heat sink may each include a plurality of cooling parts. The cooling parts of the upper heat sink may be disposed on one side or both sides of the connection member in the upper part of the first battery cell stack and the second battery cell stack. The cooling parts of the lower heat sink may be disposed on one side or both sides of the connection member in the lower part of the first battery cell stack and the lower part of the second battery cell stack.

The battery cells may be stacked along one direction from the first side plate to the second side plate. A compression pad may be interposed at least at one place between adjacent battery cells, between one of the outermost battery cells and the first side plate, or between the other one of the outermost battery cells and the second side plate. In an EOL (End of Life) state, a deformation ratio in the direction in which the battery cells are stacked may be 12% or less, and a surface pressure applied to the battery cells may be 0.9 MPa or less.

A module stiffness curve of the battery module is calculated in a slope (MPa/%) range of 0.00417 or more and 0.225 or less, and a module stiffness curve of the battery module may correspond to a relationship between the deformation ratio of the first and second side plates and the surface pressure applied to the first and second side plates.

The module stiffness curve of the battery module may be derived by reflecting the degree of compression of the compression pad relative to the surface pressure applied to the compression pads and the number of the compression pad, on the frame stiffness curve of the first and second side plates.

According to another embodiment of the present disclosure, there is provided a device comprising at least one battery pack described above.

### [Advantageous Effects]

According to the embodiments of the present disclosure, a battery pack that is simplified in module structure, improves energy density per weight, and can reduce weight, and a device including the same can be provided.

In addition, in accordance with the simplified module structure, the upper heat sink and the lower heat sink can be disposed in the limited upper and lower spaces to improve cooling performance.

The effects of the present disclosure are not limited to the effects mentioned above and additional other effects not mentioned above will be clearly understood from the description of the appended claims by those skilled in the art.

### [BRIEF DESCRIPTION OF THE DRAWINGS]

FIG. 1 is a perspective view showing a battery module included in a battery pack according to one embodiment of the present disclosure;
FIG. 2 is an exploded perspective view of the battery module of FIG. 1;
FIG. 3 is a side view showing one of battery cells included in the battery module of FIG. 2;
FIG. 4 is a perspective view showing a side plate included in the battery module of FIG. 2;
FIG. 5 is a perspective view which shows a battery module, a thermal resin layer, an upper heat sink, and a lower heat sink included in a battery pack according to one embodiment of the present disclosure;
FIG. 6 is a cross-sectional view schematically showing a cross section cut along the cutting line A-A' of FIG. 5;
FIG. 7 is a perspective view showing an upper heat sink according to one embodiment of the present disclosure;
FIG. 8 is a plan view showing a battery pack according to one embodiment of the present disclosure;
FIG. 9 is a perspective view showing a battery pack according to one embodiment of the present disclosure;
FIG. 10 is a partial perspective view showing the method of fixing a battery module to a pack tray in the battery pack according to the present embodiment;
FIG. 11 is a perspective view showing a battery module according to another embodiment of the present disclosure;
FIGS. 12 and 13 are exploded perspective views of the battery module of FIG. 11;
FIG. 14 is a perspective view showing a state in which heat sinks are disposed in battery modules according to another embodiment of the present disclosure;
FIG. 15 is an exploded perspective view of the battery modules of FIG. 14;
FIG. 16 is a perspective view showing a battery module according to another embodiment of the present disclosure;
FIGS. 17 to 19 are graphs showing module stiffness curves of battery modules and P-D curves of battery cell stacks according to an embodiment of the present disclosure;
FIG. 20 is a graph showing the range of a module stiffness curve of a battery module according to an embodiment of the present disclosure;
FIG. 21 is a graph showing a P-D curve for a single battery cell;
FIG. 22 is a graph showing a P-D curve of a single battery cell and a P-D curve of a battery cell stack; and
FIG. 23 is a graph showing module stiffness curves of Examples 1 to 4 according to the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

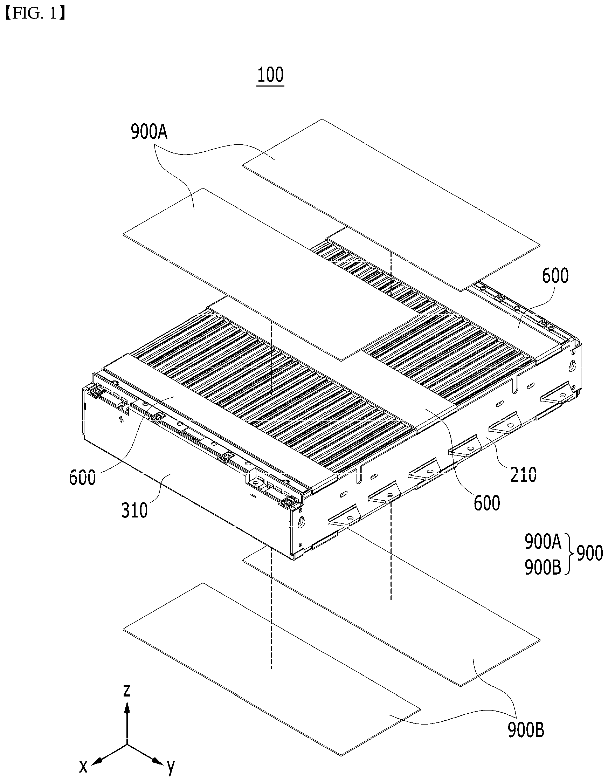

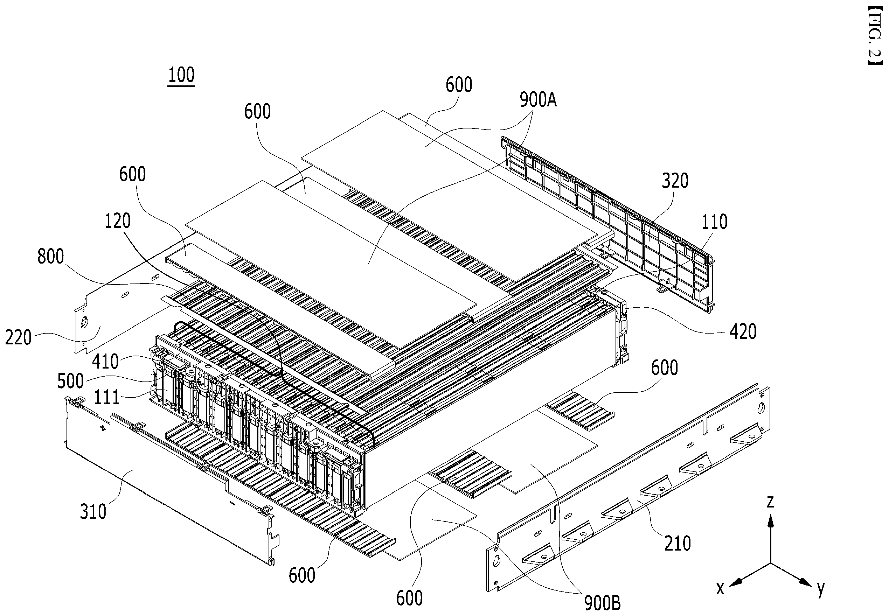

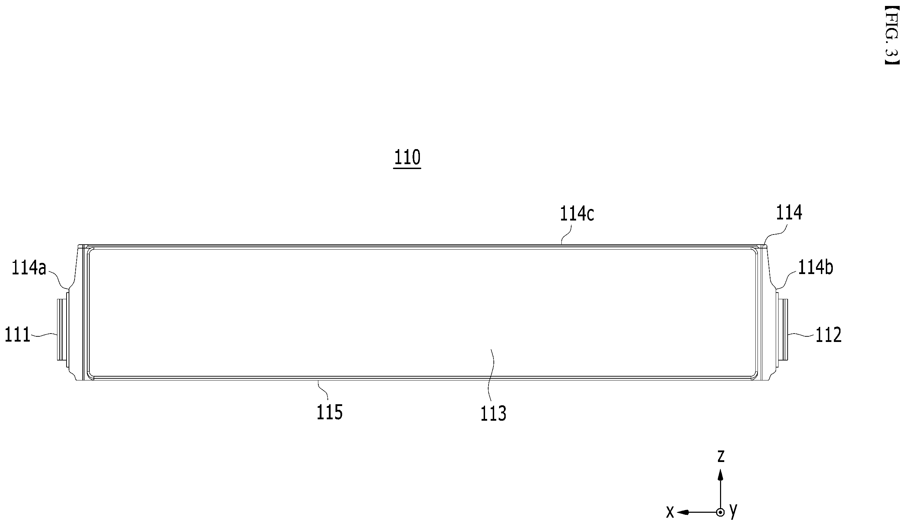

FIG. 1 is a perspective view showing a battery module included in a battery pack according to one embodiment of the present disclosure. FIG. 2 is an exploded perspective view of the battery module of FIG. 1. FIG. 3 is a side view showing one of battery cells included in the battery module of FIG. 2.

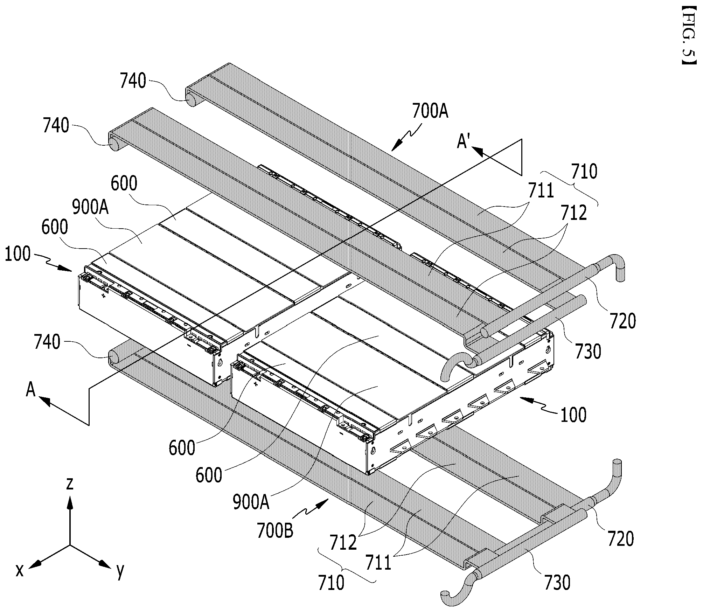

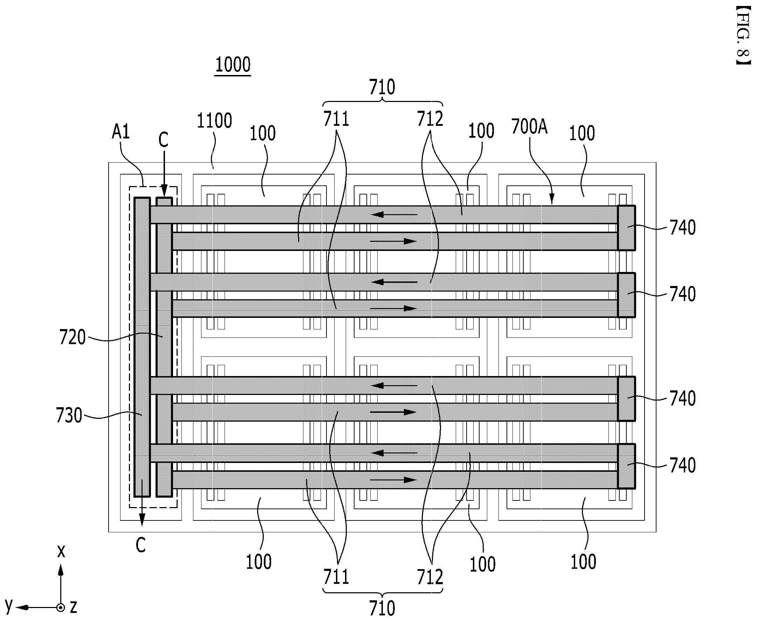

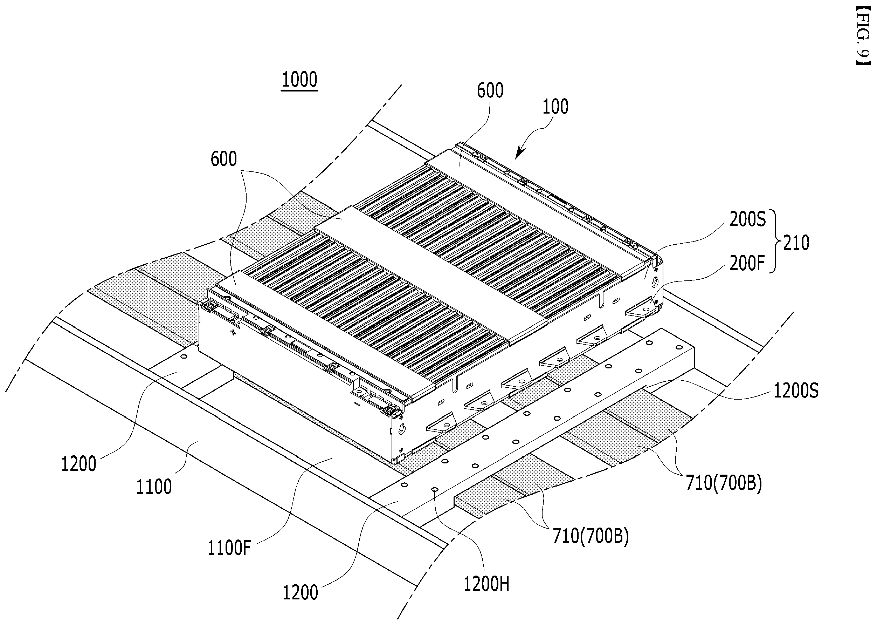

Referring to FIGS. 1 to 3, the battery pack according to one embodiment of the present disclosure includes a battery module 100; a pack tray that houses the battery module; and a heat sink including at least one cooling part through which coolant flows. The heat sink includes at least either one of an upper heat sink positioned in an upper part of the battery module or a lower heat sink positioned in a lower part of the battery module. The pack tray will be described later together with FIGS. 8 and 9, and the upper heat sink and the lower heat sink will be described later together with FIGS. 5 to 7.

Referring to FIGS. 1 to 3 again, the battery module 100 included in the battery pack includes a battery cell stack 120 in which a plurality of battery cells 110 are stacked, first and second side plates 210 and 220 positioned on both sides of the battery cell stack 120, and connection members 600 disposed on an upper part and a lower part of the battery cell stack 120 and connecting the first and second side plates 210 and 220.

First, the battery cell 110 may be a pouch-type battery cell. The pouch-type battery cell may be formed by housing an electrode assembly in a pouch case made of a laminated sheet including a resin layer and a metal layer, and then joining the outer peripheral part of the pouch case. Such battery cells 110 may be formed in a rectangular sheet-like structure. Specifically, the battery cell 110 according to the present embodiment has a structure in which two electrode leads 111 and 112 face each other and protrude from one end 114a and the other end 114b of the cell main body 113, respectively. The battery cell 110 can be produced by joining both ends 114a and 114b of a cell case 114 and one side part 114c connecting them in a state in which an electrode assembly (not shown) is housed in a cell case 114. In other words, the battery cell 110 according to one embodiment of the present disclosure has a total of three sealing parts, the sealing part has a structure of being sealed by a method such as fusion, and the remaining other side part may be composed of a connection part 115.

However, the above-mentioned battery cell 110 is an illustrative structure, and it goes without saying that a unidirectional battery cell in which the two electrode leads protrude in the same direction is available.

Such a battery cell 110 may be formed in a plurality of numbers, and the plurality of battery cells 110 may be stacked so as to be electrically connected to each other, thereby forming a battery cell stack 120. Particularly, as shown in FIG. 2, a plurality of battery cells 110 may be stacked along the direction parallel to the y-axis. The battery case 114 is generally constituted in a laminated structure of resin layer/metal thin film layer/resin layer. For example, when the surface of the battery case is formed of an O (oriented)-nylon layer, it tends to slide easily due to external impact when stacking a plurality of battery cells to form a medium- or large-sized battery module. Therefore, in order to prevent this problem and maintain a stable stacked structure of battery cells, an adhesive member such as a cohesive-type adhesive such as a double-sided tape or a chemical adhesive bonded by chemical reaction during adhesion can be attached to the surface of the battery case to form a battery cell stack 120.

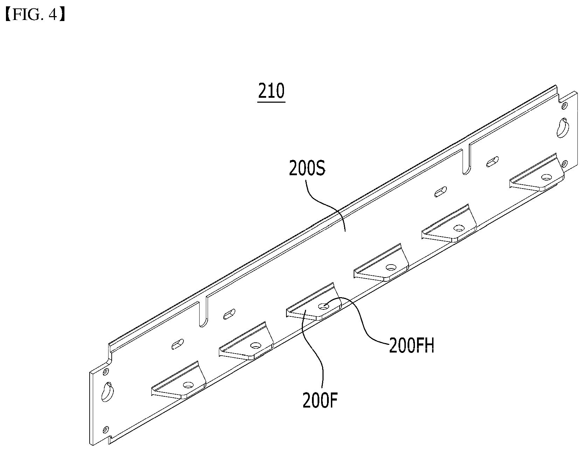

FIG. 4 is a perspective view showing a side plate included in the battery module of FIG. 2.

Referring to FIGS. 2 and 4, the first side plate 210 and the second side plate 220 each are positioned at both side surfaces of the battery cell stack 120 so as to support the battery cell stack 120. More specifically, the first side plate 210 and the second side plate 220 may be positioned on both side surfaces in a direction in which a plurality of battery cells 110 are stacked, that is, in a direction parallel to the y-axis in FIG. 2. Although only the first side plate 210 is shown in FIG. 4, the first side plate 210 and the second side plate 220 may be identical to each other but configured in a symmetrical manner.

Meanwhile, the battery module 100 according to the present embodiment includes connection members 600 that are respectively positioned on an upper side and a lower side of the battery cell stack 120, and connect the first side plate 210 and the second side plate 220.

The battery module 100 according to the present embodiment may have a configuration in which the first side plate 210 and the second side plate 220 are disposed on both sides of the battery cell stack 120, and the first side plate 210 and the second side plate 220 are fixed through the connection member 600, rather than a configuration in which the battery cell stack 120 is housed and sealed in the module housing. That is, the battery module 100 according to the present embodiment has a configuration in which the module housing structure has a simplified configuration compared to the conventional one, and can be mounted directly to the battery pack without the need for a sealed module housing. The configuration mounted to the battery pack will be described later together with FIGS. 8 and 9. Eventually, in the present embodiment, the module housing structure is omitted, thereby capable of increasing space utilization for a battery pack unit described later, improving the overall energy density, and reducing the weight.

The connection member 600 according to the present embodiment may be a member in the form of a metal band. More specifically, the connection member 600 may be in the form of a band including an elastic metal material.

A single or a plurality of the connection members 600 may be provided on at least either one of the upper side or the lower side of the battery cell stack 120. As an example, a plurality of connection members 600 may be provided on at least either one of the upper side or the lower side of the battery cell stack 120. FIG. 2 shows a state in which a plurality of connection members 600 are provided on both an upper side and a lower side of the battery cell stack 120. Such connection members 600 may be spaced apart from each other at regular intervals, and positioned at the upper part and the lower part of the battery cell stack 120, respectively. As an example, FIG. 2 shows a state in which three connection members 600 are disposed on the upper side and the lower side of the battery cell stack 120, respectively.

Since the connection member 600 is a member that connects the first side plate 210 and the second side plate 220 as described above, it may be configured so as to extend along a direction from the first side plate 210 to the second side plate 220, that is, along the stacking direction of the battery cells 110. In other words, the connection member 600 extends along a direction parallel to the y-axis direction, so that one end can be connected to the first side plate 210, and the other end can be connected to the second side plate 220. The connection member 600 may be fixed to the first side plate 210 and the second side plate 220 by a welding method.

Although not specifically shown in the figure, in another embodiment of the present disclosure, the connection member may be a long bolt member that is fastened to the first side plate 210 and the second side plate 220. That is, the connection member may be fastened to the first side plate 210 and the second side plate 220 by bolt coupling instead of welding.

Meanwhile, the battery module 100 according to the present embodiment may further comprise a first end plate 310 and a second end plate 320 positioned on one side and the other side of the battery cell stack 120, respectively; a first busbar frame 410 positioned between the battery cell stack 120 and the first end plate 310; and a second busbar frame 420 positioned between the battery cell stack 120 and the second end plate 320.

More specifically, the first busbar frame 410 and the first end plate 310 can be sequentially positioned on one side of the battery cell 110 in the direction in which any one electrode lead 111 (see FIG. 3) protrudes (x-axis direction), and the second busbar frame 420 and the second end plate 320 are sequentially positioned on the other side of the battery cell 110 in the direction in which the other electrode lead 112 (see FIG. 3) protrudes (-x-axis direction).

The first busbar frame 410 and the second busbar frame 420 can be disposed so as to cover a front surface and a rear surface of the battery cell stack corresponding to the directions in which the electrode leads 111 and 112 protrude (x-axis direction and -x-axis direction), respectively.

The first end plate 310 and the second end plate 320 can be disposed so as to cover one surface of the first busbar frame 410 and one surface of the second busbar frame 420, respectively. The first end plate 310 and the second end plate 320 may be plastic insulating covers having electrical insulation, and can protect the busbars 500, electrode leads 111 and 112, and the like positioned on the first busbar frame 410 and the second busbar frame 420 from the outside, and also cuts off the possibility of short circuits with the outside. Meanwhile, the coupling method between the first and second end plates 310 and 320 and the first and second side plates 210 and 220 is not particularly limited, and as an example, a mechanical coupling method or a bolt coupling can be applied.

Meanwhile, in another embodiment of the present disclosure, the first end plate 310 and the second end plate 320 may include a metal material such as aluminum to thereby have high stiffness. However, in this case, separate insulating covers are preferably added between the first end plate 310 and the first busbar frame 410 and between the second end plate 320 and the second busbar frame 420.

The battery module 100 according to the present embodiment may further comprise busbars 500 mounted on the first busbar frame 410 and the second busbar frame 420. The illustration of the second busbar frame 420 and the busbar 500 mounted thereto is omitted, but they may have a structure similar to that of the first busbar frame 410 shown in FIG. 2.

The electrode leads 111 and 112 of the battery cell 110 may be bent after passing through lead slits formed on a first busbar frame 410 or a second busbar frame 420, and then connected to the busbar 500. More specifically, any one electrode lead 111 may be bent after passing through lead slits of the first busbar frame 410, and then connected to the busbar 500, and the other electrode lead 112 may pass through a lead slit of the second busbar frame 420, and then be connected to the busbar 500. A connection method between the electrode leads 111 and 112 and the busbar 500 is not particularly limited, but weld junction may be performed as an example.

In the same manner as described above, the battery cells 110 constituting the battery cell stack 120 may be electrically connected to each other in series or parallel.

Meanwhile, although not specifically shown in the figure, the first busbar frame 410 or the second busbar frame 420 can be mounted with a terminal busbar for external power connection of the battery module 100 and a module connector for voltage and temperature sensing information transmission.

The first side plate 210 and the second side plate 220 according to the present embodiment may be disposed so as to cover up to the side surface of the first busbar frame 410 and the side surface of the second busbar frame 420.

Meanwhile, as shown in FIG. 2, the connection member 600 may be positioned on the upper side or the lower side of the battery cell stack 120. A heat sink may be disposed on one side of the connection member 600. When the connection member 600 is provided in a plurality of numbers on at least either one of the upper side or the lower side of the battery cell stack 120, a heat sink may be disposed in a space between the connection members 600 spaced apart from each other.

The above structure has the advantage that the cooling member in the module unit and the cooling member in the pack unit can be integrated to provide only one cooling member. That is, the cooling path of the battery module 100 can be integrated and shortened inside the battery pack, so that the effects of weight reduction and cost reduction can be realized. Below, the upper heat sink and the lower heat sink positioned on one side of the connection member 600 will be described in detail with reference to FIGS. 5 to 7 and the like.

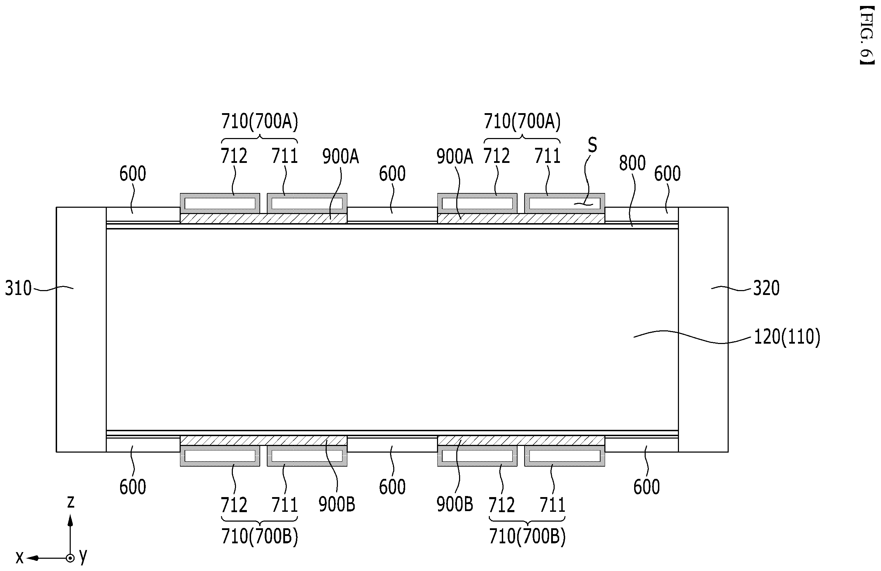

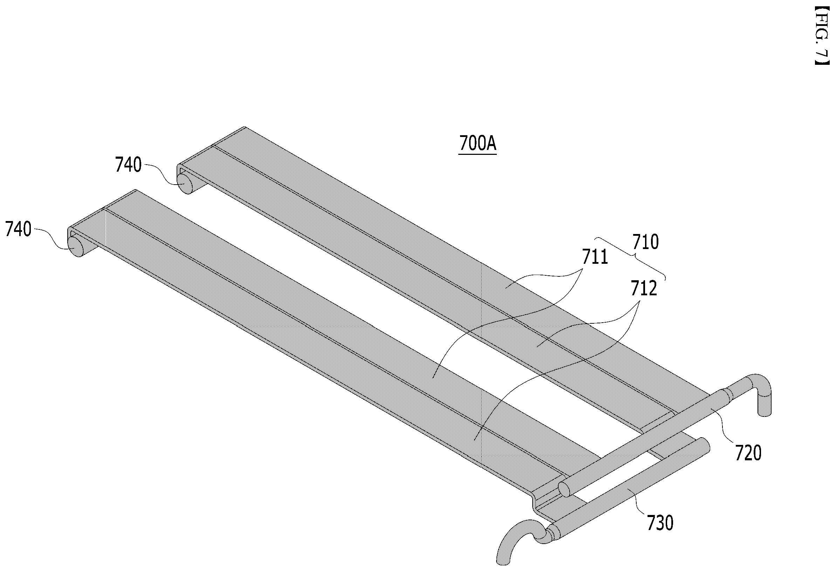

FIG. 5 is a perspective view which shows a battery module, a thermal resin layer, an upper heat sink, and a lower heat sink included in a battery pack according to one embodiment of the present disclosure. FIG. 6 is a cross-sectional view schematically showing a cross section cut along the cutting line A-A' of FIG. 5. FIG. 7 is a perspective view showing an upper heat sink according to one embodiment of the present disclosure.

Referring to FIGS. 2, 5, 6 and 7, the battery pack according to the present embodiment includes heat sinks 700A and 700B including at least one cooling part 710 through which coolant flows as described above, wherein the heat sinks 700A and 700B include at least either one of an upper heat sink 700A positioned in an upper part of the battery module 100 or a lower heat sink 700B positioned in a lower part of the battery module 100. That is, although an embodiment including both the upper heat sink 700A and the lower heat sink 700B is shown in the figures, both the battery pack in which only the upper heat sink 700A is disposed and the battery pack in which only the lower heat sink 700B is disposed correspond to embodiments of the present disclosure. Below, an embodiment including both the upper heat sink 700A and the lower heat sink 700B is mainly described, but the corresponding configuration can also be applied to both an embodiment in which only the upper heat sink 700A is disposed and an embodiment in which only the lower heat sink 700B is disposed.

The upper heat sink 700A and the lower heat sink 700B may each include at least one cooling part 710 with coolant flowing inside thereof. The cooling part 710 of the upper heat sink 700A is positioned on one side of the connection member 600 in the upper part of the battery module 100, and the cooling part 710 of the lower heat sink 700B is positioned on one side of the connection member 600 in the lower part of the battery module 100.

Specifically, as mentioned above, a plurality of connection members 600 can be provided on at least either one of the upper side or the lower side of the battery cell stack 120. More specifically, in at least either one of the upper side or the lower side of the battery cell stack 120, the connection members 600 may be positioned to be spaced apart from each other along a direction perpendicular to the stacking direction in which the battery cells 110 are stacked, and the cooling part 710 of the upper heat sink 700A and the cooling part 710 of the lower heat sink 700B may be disposed in a space between the connection members 600 spaced apart from each other. The cooling part 710 may be a tube member in which an internal space S is formed, and such an internal space S may be a space through which the coolant flows. The coolant may be cooling water, and the upper heat sink 700A and the lower heat sink 700B according to this embodiment may be of water-cooled type cooling structures.

Meanwhile, the battery module 100 according to the present embodiment may further include a thermal resin layer 900 positioned between the cooling part 710 and the battery cell stack 120. Specifically, the thermal resin layer 900 may include at least either one of an upper thermal resin layer 900A positioned between the cooling part 710 of the upper heat sink 700A or the battery cell stack 120 and a lower thermal resin layer 900B positioned between the cooling part 710 of the lower heat sink 700B and the battery cell stack 120.

The thermal resin layer 900 may be formed by applying or injecting a thermal resin and then curing the same. The thermal resin may include a thermally conductive adhesive material, and specifically, may include at least one of a silicone material, a urethane material, and an acrylic material. The thermal resin is in a liquid state during application, but is cured after application, and thus serves to fix one or more battery cells 110 constituting the battery cell stack 120. In addition, the thermal resin has excellent heat conduction properties, and can quickly transfer heat generated in the battery cell 110 to the upper heat sink 700A and the lower heat sink 700B.

Taken together, the battery module according to this embodiment has a simplified module housing structure compared to the conventional one, and includes first and second side plates 210 and 220 and a connection member 600 connecting them, wherein an upper heat sink 700A and a lower heat sink 700B are disposed in a space on one side of the connection member 600. Furthermore, the thermal resin layer 900 may be disposed in areas adjacent to the upper heat sink 700A and the lower heat sink 700B.

Through the above configuration, the space loss along the height direction can be minimized from the viewpoint of the battery module 100 and the battery pack including the battery module 100. Instead of a separate module housing structure, the space adjacent to one side of the connection member 600 connecting the first and second side plates 210 and 220 is utilized as a space where a heat sink and a thermal resin layer can be positioned, thereby reducing the height of the battery module. This leads to improved energy density and reduced weight of the battery pack including the battery module.

Further, since the heat sink and the thermal resin layer are not disposed on the outer side of a separate module housing, but are positioned adjacent to the upper part and the lower part of the battery cell stack 120 at one side of the connection member 600, it is possible to simplify the heat transfer path and improve the cooling performance.

Further, in the case of the embodiment including both the upper heat sink 700A and the lower heat sink 700B, since an upper heat sink 700A and a lower heat sink 700B are provided on the upper part and the lower part of the battery module, respectively, to form dual cooling paths in both upper and lower directions, it is possible to maximize cooling performance.

Meanwhile, referring to FIGS. 6 and 7, in the upper heat sink 700A or the lower heat sink 700B, the cooling part 710 may include a first cooling part 711 and a second cooling par 712 that extend in one direction. Further, the upper heat sink 700A and the lower heat sink 700B may each further comprise an inflow part 720 that is connected to the first cooling part 710 and introduces a coolant, a discharge part 730 that is connected to the second cooling part 712 and discharges the coolant, and a connection part 740 that connects the first cooling part 711 and the second cooling part 712.

At this time, the coolant may flow along the inflow part 720, the first cooling part 711, the connection part 740, the second cooling part 712, and the discharge part 730, and form a circulation structure.

Next, the relationship between the arrangement form of the battery modules 100 and the heat sink in the battery pack 1000 according to an embodiment of the present disclosure will be described in detail.

FIG. 8 is a plan view schematically showing a battery pack according to one embodiment of the present disclosure. Specifically, this is a plane of the battery pack 1000 in which the battery modules 100 are disposed on the pack tray 1100 as viewed along the -z-axis direction on the xy plane.

Referring to FIGS. 6 to 8 together, the battery pack 1000 according to the present embodiment includes a battery module 100, a pack tray 1100 housing the battery module 100, and heat sinks 700A and 700B including at least one cooling part with coolant flowing inside thereof, as described above. Although only the upper heat sink 700A is shown in FIG. 8, the lower heat sink may also have the same or similar configuration as the upper heat sink 700A shown in the lower part of the battery module 100.

A plurality of battery modules 100 may be configured on the pack tray 1100, and at least two battery modules 100 may be disposed along the stacking direction in which the battery cells are stacked. The stacking direction in which the battery cells are stacked means a direction parallel to the y-axis in the figure.

The cooling part 710 may pass one side of the connection member 600 of any one battery module 100, and pass one side of the connection member 600 of another battery module 100 adjacent to the one battery module 100.

More specifically, the cooling part 710 passes between the connection members 600 of any one battery module 100, and pass between the connection members 600 of the other battery module 100 adjacent to the one battery module 100. That is, at least two battery modules 100 may share the cooling part 710 together.

As described above, the cooling part 710 may include a first cooling part 711 and a second cooling part 712 extending along one direction, and the coolant C may flow along the inflow part 720, the first cooling part 711, the connection part 740, the second cooling part 712, and the discharge part 730, and form a circulation structure. At this time, the one direction in which the first cooling part 711 and the second cooling part 712 extend may be a direction parallel to a stacking direction in which battery cells are stacked. At least two battery modules 100 may share the first cooling part 711 and the second cooling part 712.

At this time, based on the battery module 100, the inflow part 720 and the discharge part 730 may be positioned on the same side, and the connection part 740 may be positioned on the opposite side of the inflow part 720 and the discharge part 730. That is, in forming the coolant circulation structure, the first cooling part 711, the second cooling part 712, and the connection part 740 connecting the first cooling part 711 and the second cooling part 712 are provided, so that the inflow part 720 and the discharge part 730 can be positioned together in one area A1 of the battery module 100.

Accordingly, since a coolant circulation system (not shown) connected to the inflow part 720 and the discharge part 730 may be provided in either one side of the battery pack 1000, the space inside the battery pack 1000 can be efficiently utilized, and an area involving a risk of coolant leakage can be limited to the vicinity of one area A1.

Meanwhile, referring to FIGS. 5 and 6 again, the number of first cooling parts 711 and second cooling parts 712 disposed in one battery module 100 is not limited. As an example, three connection members 600 may be positioned on the upper part and the lower part of the battery cell stack 120, respectively, and two first cooling parts 711 and two second cooling parts 712 may be divided and disposed between the three connection members 600.

Next, a configuration in which the battery module according to the present embodiment is fixed to the pack case will be described in detail.

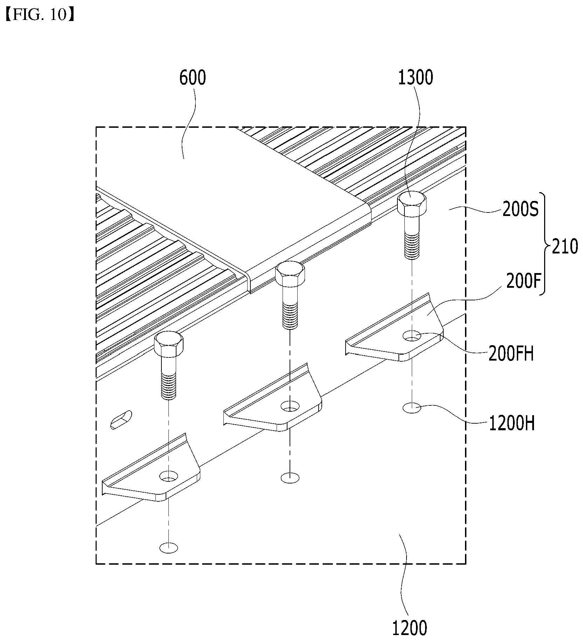

FIG. 9 is a perspective view showing a battery pack according to one embodiment of the present disclosure. FIG. 10 is a partial perspective view showing the method of fixing a battery module to a pack tray in the battery pack according to the present embodiment. For convenience of explanation, illustration of the upper heat sink and the upper thermal resin layer is omitted in FIG. 9. That is, an embodiment in which only the lower heat sink is disposed as shown can be applied, and as another embodiment, a configuration in which an upper heat sink and an upper thermal resin layer are added to FIG. 9 can be applied.

Referring to FIGS. 4, 9 and 10 together, when the battery module 100 according to the present embodiment is housed in the pack tray 1100, the first and second side plates 210 and 220 are fixed to the pack tray 1100.

First, the first side plate 210 and the second side plate 220 according to the present embodiment may each include a support part 200S that supports the outermost battery cell of the battery cell stack 120 and a fixing part 200F that protrudes in a direction perpendicular to one surface of the support part 200S. Both the first side plate 210 and the second side plate 220 may have a fixing part 200F formed on a surface opposite to the surface in the direction in which the battery cell stack is positioned.

A through hole 200FH for mounting and fixing may be formed in the fixing part 200F. The number of fixing parts 200F is not particularly limited, and a single or a plurality of fixing parts can be provided. FIG. 4 shows a state in which a plurality of fixing parts 200F are disposed at predetermined intervals.

The pack tray 1100 is a structure having an internal space, wherein one or more battery modules 100 may be housed in the internal space thereof. One or more battery modules 100 are disposed on the bottom part 1100F of the pack tray 1100. Although not specifically shown in the figure, a pack cover covering the opened upper part of the pack tray 1100 may be disposed.

At this time, it is necessary to mount and fix the battery module 100 to the pack tray 1100 to cope with external vibrations and impacts, and the first side plate 210 and the second side plate 220 of the battery module 100 according to the present embodiment are fixed to the pack tray 1100.

Specifically, as described above, the first side plate 210 and the second side plate 220 may include a support part 200S that supports the outermost battery cell of the battery cell stack and is disposed so as to be perpendicular to the bottom part 1100F of the pack tray 1100, and a fixing part 200F that protrudes in a direction perpendicular to one surface of the support part 200S. At this time, the fixing part 200F may be fixed to the pack tray 1100.

More specifically, the pack tray 1100 according to the present embodiment may further include a mounting beam 1200 disposed on an upper surface of the bottom part 1100F of the pack tray 1100, and the fixing part 200F may be fixed to the mounting beam 1200.

The mounting beam 1200 is configured so as to extend along one direction from the upper surface of the bottom part 1100F of the pack tray 1100. Although not specifically shown in the figure, when a plurality of battery modules 100 are disposed, the mounting beam 1200 may be positioned between the battery modules 100. The mounting beam 1200 may fix the battery module 100 and absorb impacts transmitted to the battery module 100 from external impacts.

As shown in FIG. 10, a through hole 200FH for mounting and fixing may be formed in the fixing part 200F. Meanwhile, with respect to the height direction, the fixing part 200F may be positioned higher than the mounting beam 1200. Here, the height direction means a direction perpendicular to one surface of the bottom part 1100F of the pack tray 1100.

The fixing part 200F may be fixed to the upper surface of the mounting beam 1200, and a bolt coupling can be performed as shown in FIG. 10. That is, a mounting hole 1200H having a screw thread formed therein may be formed on the upper surface of the mounting beam 1200. The bolt-shaped fastening member 1300 passes through the through hole 200FH of the fixing part 200F, and then may be inserted into and fastened to the mounting hole 1200H.

As described above, the battery module 100 according to the present embodiment can be fixed to the pack tray 1100 through the first side plate 210 and the second side plate 220 to configure a battery pack 1000.

Meanwhile, the battery cells 110 may cause a phenomenon in which the internal electrolyte decomposes to generate gas and the battery cell 110 swells up in the process of repeating charging and discharging, that is, a swelling phenomenon. If the swelling of the battery cell 110 cannot be controlled, it may cause a structural deformation of the battery module 100 in which a plurality of battery cells 110 are stacked, and may adversely affect the durability and performance of the battery module 100.

Particularly, in recent years, pure Si cells, all-solid-state batteries, and SiO high-content cells have been used as battery cells in order to manufacture high-capacity battery modules and battery packs, but in the case of the cells, the degree of swelling is greater. That is, in order to manufacture high-capacity battery modules and battery packs, it is essential to effectively control swelling of the battery cells 110 inside the battery modules or the battery packs. Referring to FIG. 2 again, since the pouch-type battery cells 110 usually have a large degree of swelling in the thickness direction, structures directly related to the swelling control are the first side plate 210 and the second side plate 220 disposed on both side surfaces of the battery cell stack 120.

The battery module 100 according to the present embodiment has a simplified housing structure through the first side plate 210 and the second side plate 220 and the connection member 600 connecting them, rather than a module housing configured to integrally surround the battery cell stack. Thereby, it may be difficult to have lateral stiffness and durability sufficient to control swelling of the battery cells 110.

Thus, the battery pack 1000 according to the present embodiment has been designed such that in the arrangement of the battery module 100 having a simplified housing structure, while the first side plate 210 and the second side plate 220 are directly coupled and fixed to the mounting beam 1200 on the pack tray 1100, the mounting beam 1200 supports the first side plate 210 or the second side plate 220 from the side and controls swelling.

That is, it has been designed such that mounting and fixation are performed through the first side plate 210 and the second side plate 220, and at the same time, the mounting beam 1200 can supplement the stiffness and durability of the battery module 100 for swelling control.

Taken together, the first side plate 210 and the second side plate 220 according to the present embodiment can be directly fixed to the mounting beam 1200 on the pack tray 1100 in the battery module 100 having a simplified housing structure to perform the function of mounting and fixation, and can also perform a function of supplementing the stiffness for swelling control of the battery module 100. In addition, the upper and lower heat sinks 700A and 700B are disposed in the space on one side of the connection member 600 connecting the first side plate 210 and the second side plate 220, so that the cooling structure was disposed while minimizing the increase in height. An attempt was made to reduce the space loss in the height direction and thus increase the energy density of the battery pack.

Meanwhile, referring to FIG. 2 again, the battery module 100 according to the present embodiment may further include an insulating sheet 800 which is positioned between the battery cell stack 120 and the connection member 600 positioned on the upper side of the battery cell stack 120. The insulating sheet 800 is an electrically insulating thin sheet, and may be disposed so as to cover the entire upper surface of the battery cell stack 120 in order to ensure electrical insulation of the upper side of the battery cell stack 120. The insulating sheet 800 may be an insulating film or an insulating tape, and may have a thickness of 0.1 mm or less.

In another embodiment of the present disclosure, an insulating sheet may also be not disposed between the battery cell stack 120 and the connection members 600. That is, an embodiment is also possible in which the upper surface of the battery cell stack 120 is exposed to the outside through between the connection members 600 or between the connection member 600 and the first and second end plates 310 and 320, and comes into direct contact with the upper thermal resin layer. Similarly, the battery cell stack 120 can also come into direct contact with the lower thermal resin layer 900B.

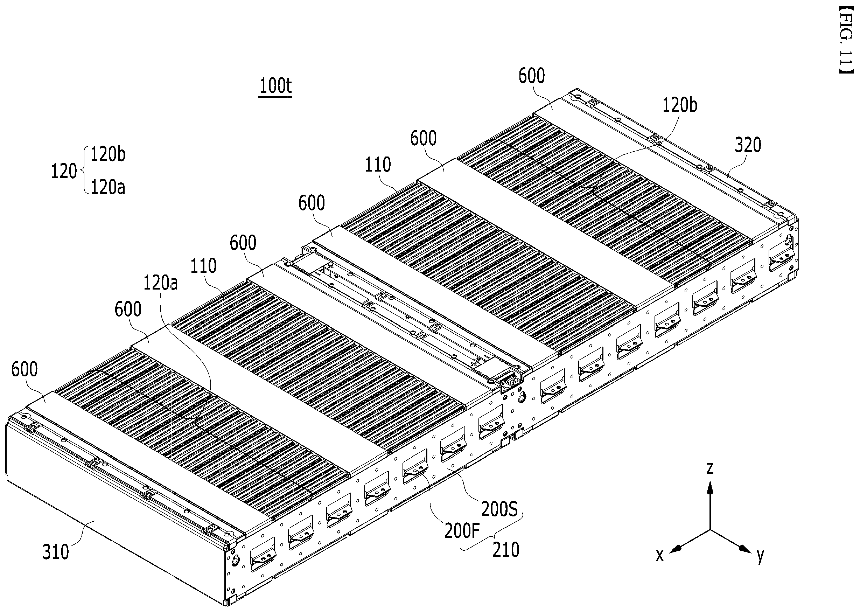

Next, a battery module and a battery pack including the battery module according to another embodiment of the present disclosure will be described in detail with reference to FIGS. 11 to 15 and the like. However, portions that overlap with the contents of the above-described embodiments are omitted for the sake of convenience.

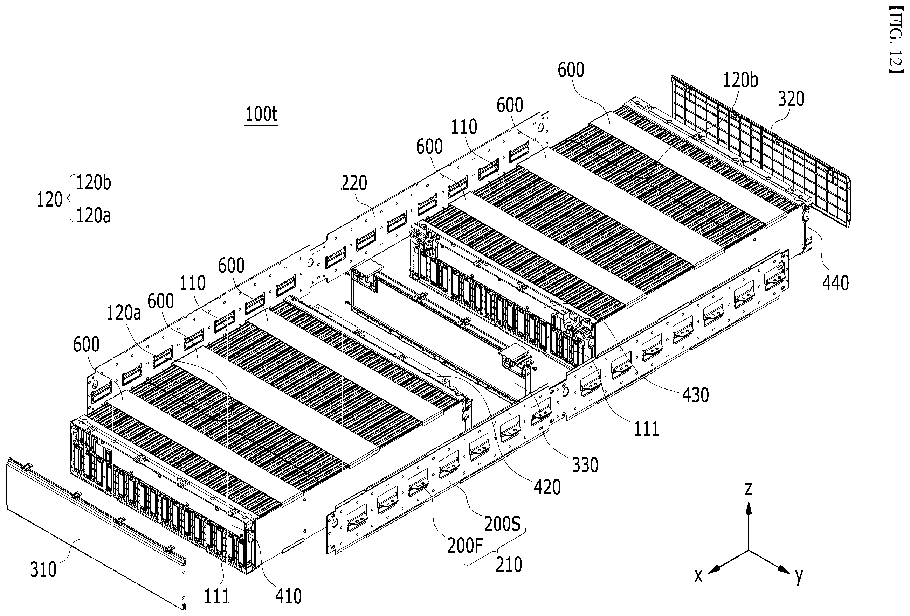

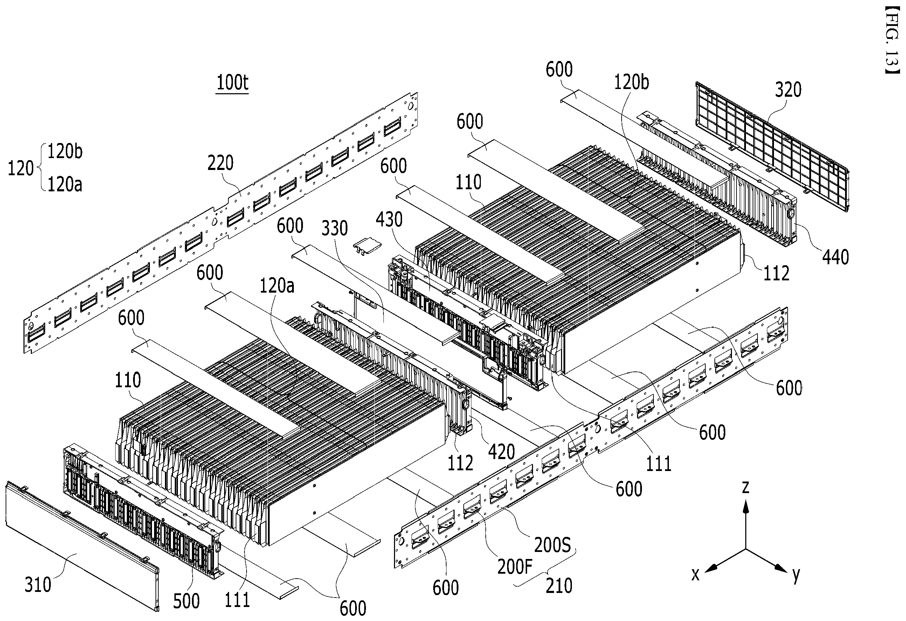

FIG. 11 is a perspective view showing a battery module according to another embodiment of the present disclosure. FIGS. 12 and 13 are exploded perspective views of the battery module of FIG. 11. Specifically, FIG. 12 shows a state in which the battery cell stack 120, the first and second side plates 210 and 220, and the first and second end plates 310 and 320 are separated, and FIG. 13 shows a state in which the first and second busbar frames 410 and 420 and the connection members 600 are separated in addition to FIG. 12.

Referring to FIGS. 11 to 13, the battery module 100t according to another embodiment of the present disclosure includes a battery cell stack 120 in which a plurality of battery cells 110 are stacked, first and second side plates 210 and 220 that are positioned on both sides of the battery cell stack 120 and connection members 600 that are disposed on the upper part and the lower part of the battery cell stack 120 and connect the first and second side plates 210 and 220. A single or a plurality of the connection members 600 may be provided in the upper part and the lower part of the battery cell stack 120.

At this time, the battery cell stack 120 according to this embodiment may include a first battery cell stack 120a and a second battery cell stack 120b. The first battery cell stack 120a and the second battery cell stack 120b may be disposed to be spaced apart from each other along a direction perpendicular to a stacking direction in which the battery cells 110 are stacked. Each of the first battery cell stack 120a and the second battery cell stack 120b is similar to the structure of the above-mentioned battery cell stack in the structure in which the battery cells 110 are stacked in one direction. That is, within the first battery cell stack 120a and the second battery cell stack 120b, the battery cells 110 are stacked along a direction parallel to the y-axis, and the first battery cell stack 120a and the second battery cell stack 120b may be disposed to be spaced apart from each other along a direction parallel to the x-axis.

This embodiment has a configuration in which the first battery cell stack 120a and the second battery cell stack 120b are disposed in one battery module 100t. That is, it may correspond to a battery module of a kind of twin model.

The first side plate 210 may extend so as to cover both one side surface of the first battery cell stack 120a and one side surface of the second battery cell stack 120b, and the second side plate 220 may extend so as to cover both the other side surface of the first battery cell stack 120a and the other side surface of the second battery cell stack 120b.

The first side plate 210 and the second side plate 220 may be positioned so as to cover both side surfaces of the first and second battery cell stacks 120a and 120b in the direction in which the battery cells 110 are stacked.

Further, the first side plate 210 and the second side plate 220 may include a support part 200S that supports the outermost battery cell of the battery cell stack 120 and a fixing part 200F that protrudes in a direction perpendicular to one surface of the support part 200S. Also, the connection member 600 may connect the first side plate 210 and the second side plate 220. As an example, while the plurality of connection members 600 are positioned on the upper side and the lower side of the first battery cell stack 120a and the second battery cell stack 120b, one end of the connection member 600 is connected to the first side plate 210, and the other end of the connection member 600 may be connected to the second side plate 220. A detailed description thereof is omitted because it overlaps with the description in the previous embodiments.

Meanwhile, the battery module 100t according to the present embodiment may further include a first end plate 310 positioned on one side of the first battery cell stack 120a and a second end plate 320 positioned on one side of the second battery cell stack 120b. Based on the first battery cell stack 120a and the second battery cell stack 120b, the first end plate 310 and the second end plate 320 may be positioned on the sides opposite to each other.

Further, the battery module 100t may further include an insulating plate 330 positioned between the first battery cell stack 120a and the second battery cell stack 120b. The first end plate 310, the second end plate 320 and the insulating plate 330 may be plastic insulating covers having electrical insulation. Meanwhile, the coupling method between the first and second end plates 310 and 320, the insulating plate 330, and the first and second side plates 210 and 220 is not particularly limited, and as an example, a mechanical coupling method or a bolt coupling can be applied.

The battery module 100t may include a first busbar frame 410 positioned between the first battery cell stack 120a and the first end plate 310 and a second busbar frame 420 positioned between the first battery cell stack 120a and the insulating plate 330. In addition, the battery module 100t may include a third busbar frame 430 positioned between the second battery cell stack 120b and the insulating plate 330, and a fourth busbar frame 440 positioned between the second battery cell stack 120b and the second end plate 320.

The first to fourth busbar frames 410, 420, 430 and 440 may have the same or similar structures as the above-mentioned busbar frames. As an example, the busbars 500 may be mounted on the first to fourth busbar frames 410, 420, 430 and 440. The electrode leads 111 and 112 of the battery cell 110 are bent after passing through lead slits formed in the first to fourth busbar frames 410, 420, 430 and 440, and connected to the busbar 500. Details regarding this are omitted as they overlap with the above-mentioned contents.

The insulating plate 330 may be positioned between the second busbar frame 420 and the third busbar frame 430. One surface of the insulating plate 330 may cover the second busbar frame 420, and the other surface of the insulating plate 330 may cover the third busbar frame 430. Since the insulating plate 330 contains an electrical insulating material, it is possible to cut off generation of short circuits between electrical components mounted on the second busbar frame 420 and the third busbar frame 430, respectively.

The first side plate 210 and the second side plate 220 according to the present embodiment may be disposed so as to cover up to the side surface of the first busbar frame 410 and the side surface of the second busbar frame 420.

In order to achieve the same battery capacity for the battery module 100t shown in FIGS. 11 to 13 and the battery module 100 shown in FIGS. 1 and 2, one battery module 100t and two battery modules 100 must be compared. This is because the battery module 100t shown in FIGS. 11 to 13 includes first and second battery cell stacks 120a and 120b.

One battery module 100t is configured such that a first end plate 310, a second end plate 320 and an insulating plate 330 are disposed along the direction perpendicular to the stacking direction of the battery cells 110, that is, along the direction parallel to the x-axis. That is, a total of three members are disposed. Meanwhile, the two battery modules 100 is configured such that two first end plates 310 and two second end plates 320 are respectively disposed. That is, a total of four members are disposed.

Therefore, the battery module 100t according to the present embodiment has the advantage that the space utilization factor in the longitudinal direction of the module is increased and the number of parts is reduced as compared with the above-mentioned battery module 100.

Further, only one battery module 100t is required for each of the first and second side plates 210 and 220, while two battery modules 100 are disposed, so that two first and second side plates 210 and 220 are also required. That is, it has the advantage of reducing the number of parts.

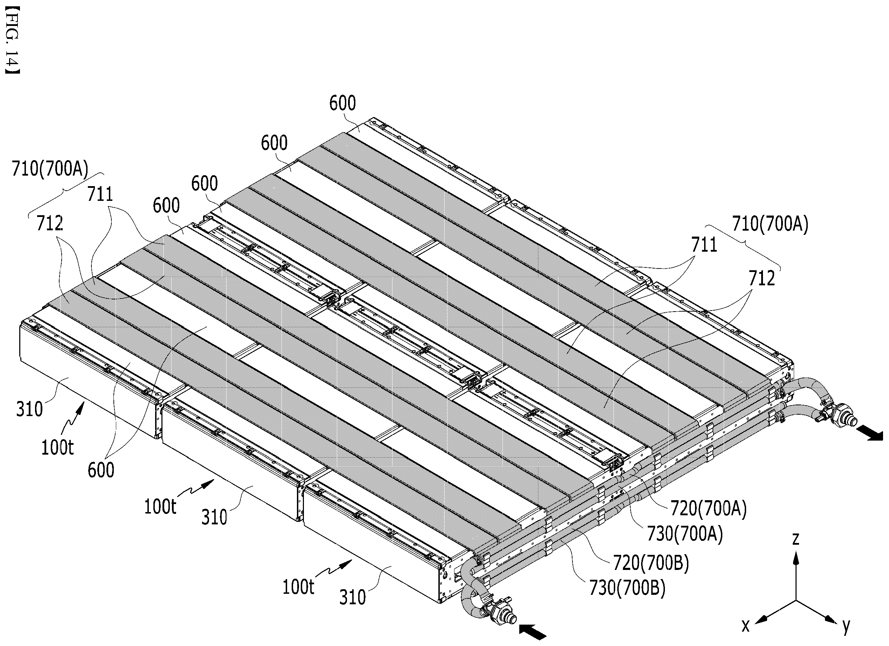

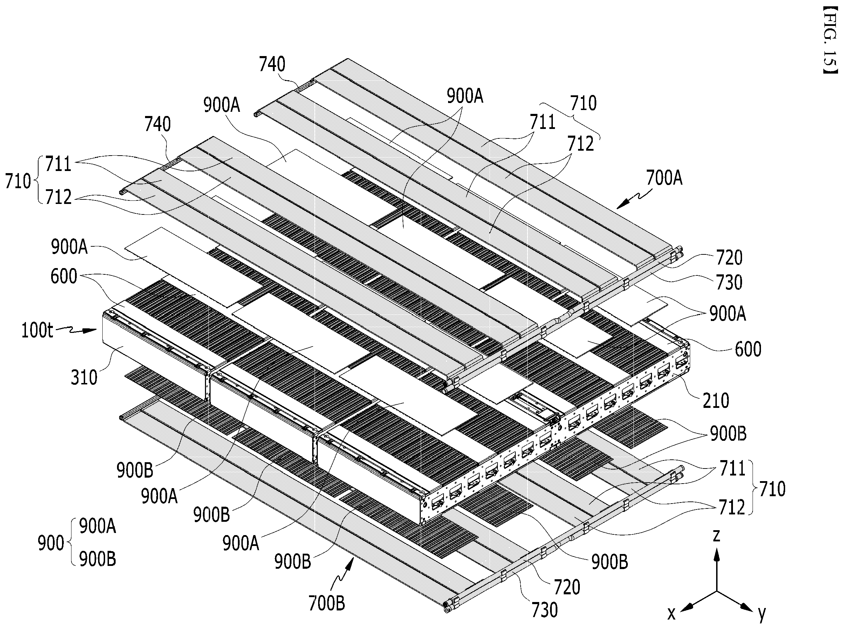

FIG. 14 is a perspective view showing a state in which heat sinks are disposed in battery modules according to another embodiment of the present disclosure. Specifically, FIG. 14 shows a state in which the battery modules of FIGS. 11 to 13 are disposed in a plurality of numbers, and heat sinks are disposed in these battery modules. FIG. 15 is an exploded perspective view of the battery modules of FIG. 14.

Referring to FIGS. 13 to 15 together, a battery pack according to the present embodiment may include a battery module 100t. As described above, the battery module 100t may be disposed on the pack tray, wherein illustration of the pack tray is omitted. At this time, the battery pack includes heat sinks 700A and 700B including at least one cooling part 710 through which coolant flows. The heat sinks 700A and 700B may include at least either one of an upper heat sink 700A positioned at the upper part of the battery module 100t or a lower heat sink 700B positioned at the lower part of the battery module 100t. Although an embodiment including both an upper heat sink 700A and a lower heat sink 700B is shown in the figures, both the battery pack in which only the upper heat sink 700A is disposed and the battery pack in which only the lower heat sink 700B are disposed correspond to embodiments of the present disclosure.

The upper heat sink 700A and the lower heat sink 700B may include a plurality of cooling parts 710. The cooling parts 710 of the upper heat sink 700A may be disposed on one side or both sides of the connection member 600 in an upper part of the first battery cell stack 120a and the second battery cell stack 120b. The cooling parts 710 of the lower heat sink 700B may be disposed on one side or both sides of the connection member 600 in a lower part of the first battery cell stack 120a and the second battery cell stack 120b.

When a plurality of connection members 600 are provided, the connection members 600 may be disposed to be spaced apart from each other along a direction perpendicular to the stacking direction in which the battery cells 110 are stacked at the upper side or the lower side of the first battery cell stack 120a and the second battery cell stack 120b, and the cooling part 710 of the upper heat sink 700A and the cooling part 710 of the lower heat sink 700B may be disposed in a space between the connection members 600 spaced apart from each other. The cooling part 710 may be a tube member in which an internal space S is formed, and this internal space S may be a space through which coolant flows.

The battery module 100t according to the present embodiment may further include a thermal resin layer 900 positioned between the cooling part 710 and the battery cell stack 120. Specifically, the thermal resin layer 900 may include at least either one of an upper thermal resin layer 900A positioned between the cooling part 710 of the upper heat sink 700A and the battery cell stack 120 or a lower thermal resin layer 900B positioned between the cooling part 710 of the lower heat sink 700B and the battery cell stack 120.

As described above, through the above structure, the space on one side of the connection member 600 is utilized as a space where the heat sink and the thermal resin layer can be positioned, thereby reducing the height of the battery module. In addition, the heat transfer path can be simplified to improve the cooling performance.

Meanwhile, in the upper heat sink 700A or the lower heat sink 700B, the cooling part 710 may include a first cooling part 711 and a second cooling part 712 extending along one direction. In addition, the upper heat sink 700A and the lower heat sink 700B may each include an inflow part 720 connected to the first cooling part 710 and introducing the coolant, a discharge part 730 connected to the second cooling part 712 and discharging the coolant and a connection part 740 connecting the first cooling part 711 and the second cooling part 712. The coolant may flow along the inflow part 720, the first cooling part 711, the connection part 740, the second cooling part 712, and the discharge part 730 to form a circulation structure.

Meanwhile, the battery modules 100t may be configured by a plurality of numbers, and at least two battery modules 100t may be disposed along a stacking direction in which battery cells are stacked. The stacking direction in which the battery cells are stacked means a direction parallel to the y-axis in the figure. As an example, FIGS. 14 and 15 show a state in which three battery modules 100t are disposed along a stacking direction in which battery cells are stacked.

The cooling part 710 may pass one side of the connection member 600 of any one battery module 100t, and pass one side of the connection member 600 of another battery module 100t adjacent to the one battery module 100t. That is, at least two battery modules 100t may share the cooling part 710. Since the battery module 100t according to the present embodiment has a configuration in which first and second battery cell stacks are disposed in the longitudinal direction of the module, it is possible to share the cooling part 710 between the battery modules 100t disposed along the stacking direction of the battery cells.

As described above, the cooling part 710 may include a first cooling part 711 and a second cooling part 712 extending along one direction, and the one direction in which the first cooling part 711 and the second cooling part 712 extend may be a direction parallel to a stacking direction in which battery cells are stacked. At least two battery modules 100t may share the first cooling part 711 and the second cooling part 712.

At this time, based on the battery module 100t, the inflow part 720 and the discharge part 730 may be positioned on the same side, and the connection part 740 may be positioned on an opposite side of the inflow part 720 and the discharge part 730. Accordingly, since a coolant circulation system (not shown) connected to the inflow part 720 and the discharge part 730 may be provided on either one side of the battery packs 1000, the space inside the battery pack 1000 can be efficiently utilized, and an area involving a risk of leakage of coolant can be limited to one area.

Meanwhile, the number of the first cooling part 711 and the second cooling part 712 disposed in one battery module 100t is not limited. In particular, since the battery module 100t is configured such that first and second battery cell stacks are disposed in the longitudinal direction of the module, the number of the first cooling part 711 and the second cooling part 712 may be further required.

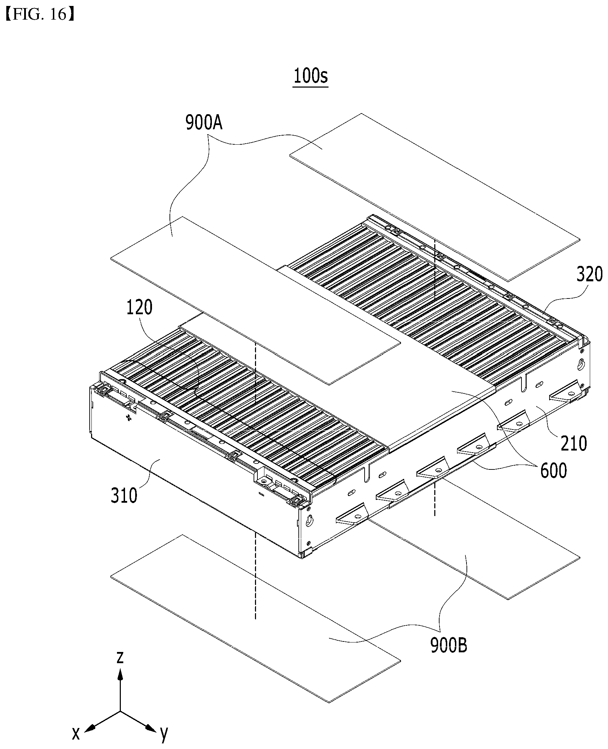

Next, a battery module according to another embodiment of the present disclosure will be described in detail with reference to FIG. 16. However, the portions overlapping with the contents of the above-mentioned embodiments are omitted for the sake of convenience.

FIG. 16 is a perspective view showing a battery module according to another embodiment of the present disclosure.

Referring to FIG. 16, the battery module 100s according to another embodiment of the present disclosure includes a battery cell stack 120 in which a plurality of battery cells are stacked, a first side plate 210 and a second side plate (not shown) positioned on both side surfaces of the battery cell stack 120. For the battery cell stack 120, the first side plate 210, and the second side plate (not shown), the same or similar structures as those of the above-mentioned embodiments can be applied. A detailed description regarding this will be omitted since it overlaps with the above-mentioned contents.

The battery module 100s according to the present embodiment includes connection members 600 that are disposed on the upper part and the lower part of the battery cell stack 120 and connect the first side plate 210 and the second side plate (not shown). At this time, the connection member 600 may be provided independently on the upper part and the lower part of the battery cell stack 120. That is, a single of the connection member 600 may be positioned in the upper part of the battery cell stack 120, and a single of the connection member may also be positioned in the lower part of the battery cell stack 120. The connection member 600 extends in a direction parallel to the y-axis direction, so that one end can be connected to the first side plate 210, and the other end can be connected to the second side plate (not shown). The connection member 600 may be fixed to the first side plate 210 and the second side plate (not shown) by a welding method.

That is, unlike the above-mentioned embodiment in which a plurality of connection members are provided on each of the upper part and the lower part of the battery cell stack 120, the battery module 100s according to the present embodiment includes connection members 600 disposed one by one on the upper part and the lower part of the battery cell stack 120, respectively.

Although not specifically shown in the figure, the heat sink may be disposed on one side or both sides of the connection member 600. That is, the upper heat sink may be disposed on one side or both sides of the connection member 600 positioned in the upper part of the battery cell stack 120, and the lower heat sink may be disposed on one side or both sides of the connection member 600 positioned in the lower part of the battery cell stack 120.

More specifically, in the upper area of the battery cell stack 120, an upper thermal resin layer 900A may be formed in an area between the connection member 600 and the first end plate 310 and an area between the connection member 600 and the second end plate 320. An upper heat sink (not shown) may be positioned on the upper thermal resin layer 900A.

Similarly, in the lower area of the battery cell stack 120, a lower thermal resin layer 900B may be formed in an area between the connection member 600 and the first end plate 310, and an area between the connection member 600 and the second end plate 320. A lower heat sink (not shown) may be positioned under the lower thermal resin layer 900B.

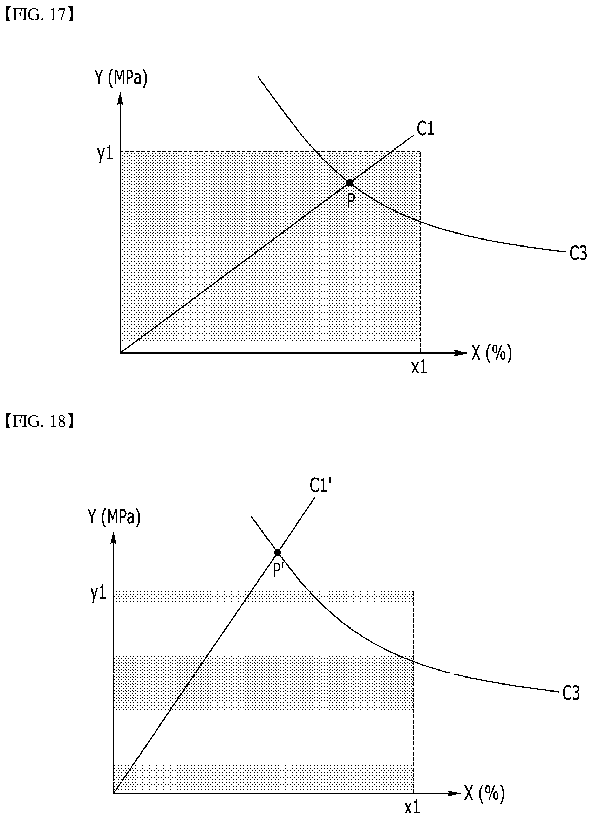

Next, a method for designing a battery module according to the present embodiment will be described with reference to FIGS. 17 to 23.

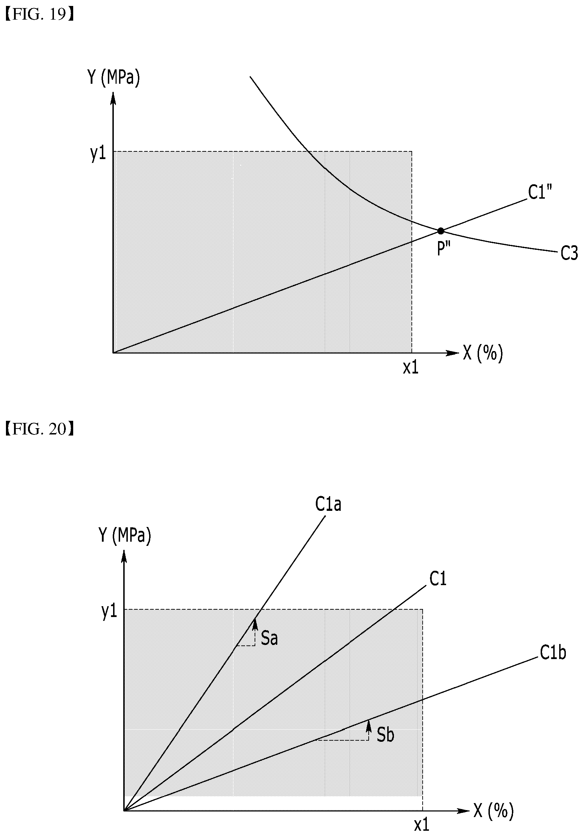

FIGS. 17 to 19 are graphs showing module stiffness curves of battery modules and P-D curves of battery cell stacks according to an embodiment of the present disclosure. FIG. 20 is a graph showing the range of a module stiffness curve of a battery module according to an embodiment of the present disclosure.

Referring to FIG. 2 and FIGS. 17 to 20 together, in the battery module 100 according to an embodiment of the present disclosure, the battery cells 110 may be stacked along one direction from the first side plate 210 to the second side plate 220. Further, a compression pad may be interposed at least at one place between adjacent battery cells 110, between one of the outermost battery cells 110 and the first side plate 210, or between the other of the outermost battery cells 110 and the second side plate 220.

At this time, the module stiffness curve C1 caused by the first and second side plates 210 and 220 and the P-D (pressure-displacement) curve C3 of the battery cell stack 120 showing the swelling characteristics of the battery cells 110 are calculated, respectively, and they are fitted into one graph. Then, the swelling behavior of the battery module can be predicted by a method of finding an equilibrium point (intersection point) between the two curves.

FIGS. 17 to 19 show intersections P, P' and P" between the module stiffness curves C1, C1' and C" and the P-D curve C3 of the battery cell stack. The P-D curve C3 of the battery cell stack is a graph showing the relationship between the surface pressures that the battery cell 110 receives according to the degree of change when the thickness of the battery cell 110 changes due to the swelling of the battery cell 110. The P-D curve C3 of the battery cell stack may be measured in an EOL (End of Life) state of the battery cells 110. Here, EOL refers to the state when the ratio of the current capacity of the battery to the initial capacity of the battery reaches a predetermined ratio, and the ratio may be 80%. In other words, EOL may refer to the battery state when the capacity of the battery reaches 80% of the initial value, and may correspond to a state in which the lifespan of the corresponding battery has expired or replacement is required. Meanwhile, the module stiffness curves C1, C1' and C" are graphs showing the relationship between the extent to which the width W of the first and second side plates 210 and 220 changes according to the direction in which the battery cells 110 are stacked and the load applied to the first and second side plates 210 and 220. The direction in which the battery cells 110 are stacked corresponds to a direction from the first side plate 210 to the second side plate 220, and the direction in which the battery cells 110 are stacked is hereinafter referred to as the width direction. Further, the widths W of the first and second side plates 210 and 220 mean the distance between the first side plate 210 and the second side plate 220 along the width direction. Each of the module stiffness curve C1 and the P-D curve C3 of the battery cell stack will be described in detail below.

In each of the module stiffness curves C1, C1' and C" and the P-D curve C3 of the battery cell stack, the X-axis corresponds to deformation ratio, and the unit may be %. The Y-axis corresponds to the applied surface pressure, and the unit may be MPa.

The intersection points P, P' and P" between the module stiffness curves C1, C1' and C" and the P-D curve C3 of the battery cell stack corresponds to the point where the behavior due to swelling of the battery cell stack 120 and the behavior due to deformation of the first and second side plates 210 and 220 are balanced. In other words, in the case of a battery module in which a battery cell stack 120 showing a specific P-D curve C3 in an EOL (End of Life) state is housed in a space formed by the first and second side plates 210 and 220 and the connection member 600 showing a specific module stiffness curve C1, the corresponding battery module can be predicted as having deformation ratio and surface pressure corresponding to the intersection points P, P' and P" in the EOL state. That is, the battery module is deformed by the amount corresponding to the X-axis value of the intersection points P, P' and P" in the width direction in the EOL state, and the battery cells 110 and the first and second side plates 210 and 220 receive surface pressure as much as the Y-axis value of the intersection points P, P' and P".

At this time, as shown in FIG. 17, the intersection point P is preferably positioned within the deformation limit point x1 and the pressure limit point y1. The deformation limit point x1 is 12%, and the pressure limit point y1 is 0.9 MPa. That is, it is preferable that the X-axis value of the intersection point P is 12% or less, which is the deformation limit point x1, and the Y-axis value of the corresponding intersection point P is 0.9 MPa or less, which is the pressure limit point y1. That is, the battery module according to the present embodiment may have the feature that in the EOL state, the deformation ratio in the direction in which the battery cells 110 are stacked is 12% or less, and the surface pressure applied to the battery cells 110 is 0.9 MPa or less.

As shown in FIG. 18, when the Y-axis value of the intersection point P' exceeds the pressure limit point y1, it is predicted that in the EOL state, the surface pressure exceeding the pressure limit point y1 is applied to the battery cells 110 and the first and second side plates 210 and 220 of the corresponding battery module. When a pressure exceeding 0.9 MPa, which is the pressure limit point y1, is applied to the battery cells 110, a problem of degradation of life performance of the battery cells 110, such as sudden drop, may occur. Further, when a pressure exceeding 0.9 MPa, which is the pressure limit point y1, is applied to by the first and second side plates 210 and 220, a surface pressure exceeding the yield strength can be applied so that the first and second side plates 210 and 220 can be damaged and deformed.

As shown in FIG. 19, when the X-axis value of the intersection point P" exceeds the deformation limit point x1, it is predicted that in the EOL state, the battery module will be deformed more than the deformation limit point x1 in the width direction. This means that the thickness change due to the expansion of the battery cells 110 is excessively allowed, which may cause problems such as disconnection between electrode leads and tabs in the battery cell 110 and cracks in the pouch-type battery case of the battery cell 110. In addition, since the battery module is predicted to be deformed more than the deformation limit point x1 of 12%, the space occupied by the battery module inside the battery pack is excessively increased, which causes the energy density of the battery module and the battery pack to decrease.

Meanwhile, referring to FIG. 20, in the case of the battery module according to the present embodiment, the module stiffness curve C1 can be calculated in a slope range of 0.00417 or more and 0.225 or less (MPa/%). That is, the module stiffness curve C1 of the battery module according to the present embodiment can be formed in the range between a lower limit module stiffness curve C1b having a slope Sb of 0.00417 MPa/% and an upper limit module stiffness curves C1a having a slope Sa of 0.225 MPa/%. In order for the intersection point (P) between the module stiffness curve C1 and the P-D curve C3 of the battery cell stack to be positioned within the range of the deformation limit point x1 and the pressure limit point y1, it is preferable that the module stiffness curve C1 is calculated in a slope (MPa/%) range of 0.00417 or more and 0.225 or less.

The module stiffness curve C1 will be specifically described below. As described above, the module stiffness curve C1 is a graph showing the relationship between the extent to which the width between by the first and second side plates 210 and 220 changes according to the direction in which the battery cells 110 are stacked and the load applied to by the first and second side plates 210 and 220. From the viewpoint of the module stiffness curve C1, the X axis corresponds to the deformation ratio % according to the width direction between by the first and second side plates 210 and 220. The deformation ratio may be calculated based on the width between the first and second side plates 210 and 220 deformed along the width direction, relative to the width between the first and second side plates 210 and 220 before deformation. For example, the deformation ratio may be calculated as the ratio of the extent to which the width between the first and second side plates 210 and 220 is deformed relative to the width between the first and second side plates 210 and 220 before deformation. From the viewpoint of the module stiffness curve C1, the Y-axis may correspond to the surface pressure MPa applied to the first and second side plates 210 and 220 according to the deformation ratio of the first and second side plates 210 and 220.

In order to calculate the module stiffness curve C1, first, the frame stiffness curve may be calculated. The frame stiffness curve is a graph of the relationship between the deformation ratio of the first and second side plates 210 and 220 and the surface pressure applied to the first and second side plates 210 and 220. Such frame stiffness curves can be obtained through several actual tests or simulations. For example, an actual force is applied to the first and second side plates 210 and 220 connected to the connection member 600 to measure the degree of deformation of the width direction between the first and second side plates 210 and 220. A frame stiffness curve can be derived by repeating the process while changing the applied force. A module stiffness curve C1 can be derived by considering the influence of the compression pad on the frame stiffness curve. Specifically, the degree of compression of the compression pad relative to the surface pressure applied to the compression pad and the number of compression pads can be reflected in the frame stiffness curve to finally derive the module stiffness curve C1.

Below, the P-D curve C3 of the battery cell stack will be described in detail. As described above, the P-D curve C3 of the battery cell stack is a graph showing the relationship of the surface pressure received by the battery cell 110 according to the degree of change when the thickness of the battery cell 110 changes due to swelling. From the viewpoint of the P-D curve C3 of the battery cell stack, the X axis may correspond to the deformation ratio (%) along the width direction of the battery cell stack 120, and the Y-axis may correspond to surface pressure MPa applied to the battery cells 110 included in the battery cell stack 120.

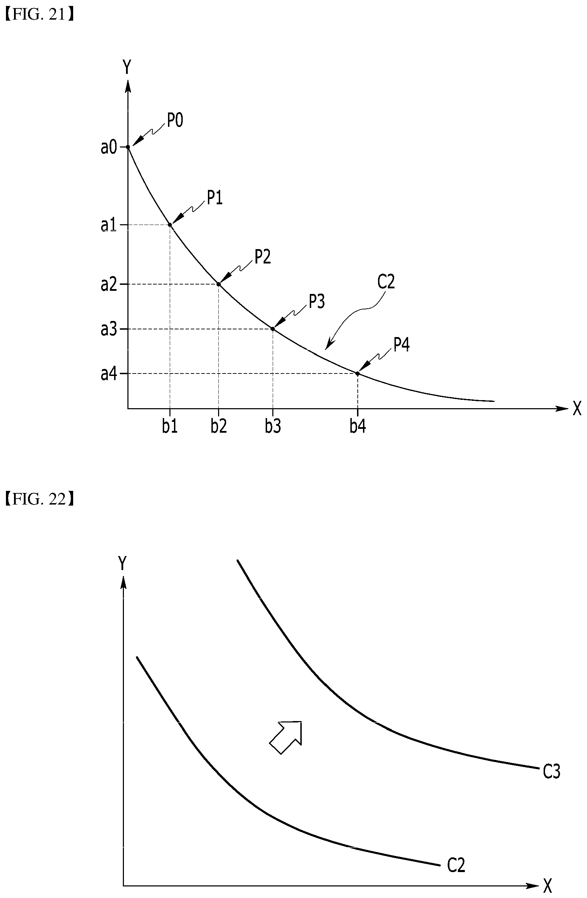

Next, the process of calculating the P-D curve C3 of the battery cell stack will be described in detail with reference to FIGS. 21 and 22.

FIG. 21 is a graph showing a P-D curve for a single battery cell.

Referring to FIG. 21, the thickness variation and surface pressure of a single battery cell 110 according to charge/discharge cycles may be measured. Specifically, a single battery cell 110 is positioned in a fixing jig in which thickness variation is limited, and then charge/discharge cycles are repeated. After that, the surface pressure value of a0 is measured through a load cell disposed in the corresponding fixing jig. The measured a0 is represented by P0 on the Y-axis. Next, a single battery cell 110 is positioned in a variable jig in which the thickness can be changed by a spring or the like, and then the charge/discharge cycles are repeated. Then, the surface pressure value of a1 is measured through the load cell disposed on the variable jig, and the increased thickness of the battery cell 110 is measured to calculate the thickness deformation ratio of b1. The corresponding a1 and b1 are denoted by point P1. The spring constant of the variable jig is changed and the measurement process is repeated to measure the surface pressure values of a2, a3, and a4 and the deformation ratio values of b2, b3, and b4, respectively. Based on such values, coordinate points P2, P3 and P4 can be displayed, and one curve C2 can be derived. And, the curve C2 thus derived corresponds to the P-D (pressure-displacement) curve of a single battery cell.

FIG. 22 is a graph showing a P-D curve of a single battery cell and a P-D curve of a battery cell stack.

Referring to FIGS. 21 and 22 together, the number of battery cells 110 included in the battery cell stack 120 can be reflected in the P-D curve C2 of a single battery cell obtained through the process described in FIG. 21 to obtain the P-D curve C3 of the battery cell stack 120. As the number of battery cells 110 increases, the surface pressure required according to the degree of deformation increases, so that the P-D curve C3 of the battery cell stack 120 is naturally positioned in the upper part compared to the P-D curve C2 of a single battery cell.

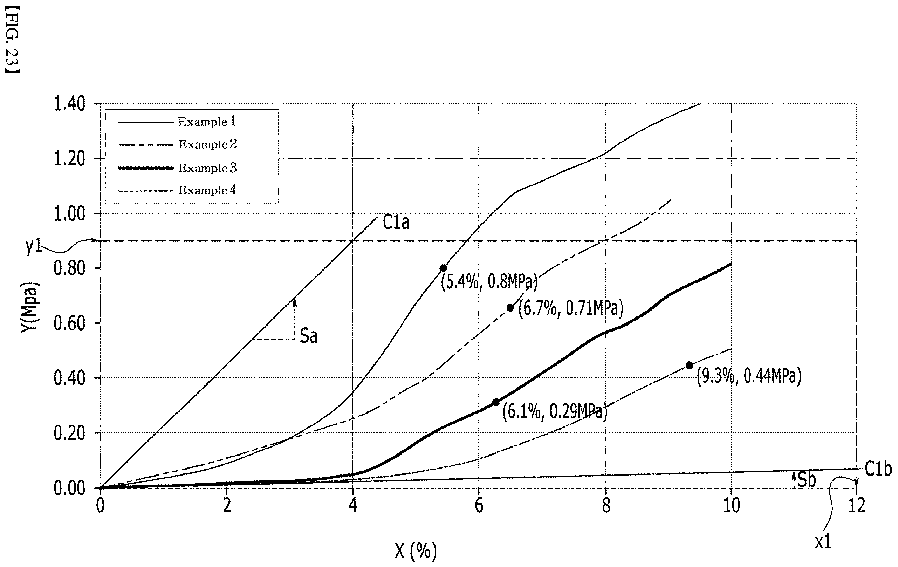

FIG. 23 is a graph showing module stiffness curves of Examples 1 to 4 according to the present disclosure.

Referring to FIG. 23, the module stiffness curves of each of Examples 1 to 4 are shown. The P-D curves of the battery cell stack are not shown, but the equilibrium point (intersection point) where each of the module stiffness curves of Examples 1 to 4 meets the P-D curve of each of the battery cell stacks of Examples 1 to 4 is displaced.

Looking at the swelling behavior of the battery module that is predicted according to the above method, it is predicted that in the EOL state, the battery module of Example 1 is deformed in the width direction by 5.4%, and the internal battery cells and the first and second side plates receive a surface pressure of 0.8 MPa. Moreover, it is predicted that in the EOL state, the battery module of Example 2 is deformed in the width direction by 6.7%, and the internal battery cells and the first and second side plates receive a surface pressure of 0.71 MPa. Further, it is predicted that in the EOL state, the battery module of Example 3 is deformed in the width direction by 6.1%, and the internal battery cells and the first and second side plates receive a surface pressure of 0.29 MPa. Finally, it is predicted that in the EOL state, the battery module of Example 4 is deformed in the width direction by 9.3%, and the internal battery cells and the first and second side plates receive a surface pressure of 0.44 MPa.

All of the battery modules of Examples 1 to 4 exhibit the feature that in the EOL (End of Life) state, the deformation ratio in the direction in which the battery cells are stacked is 12% or less, and the surface pressure applied to the battery cells is 0.9 MPa or less. Further, the module stiffness curves of the battery modules of Examples 1 to 4 are calculated in the range of slope (MPa/%) of 0.00417 or more and 0.225 or less. That is, the module stiffness curves of the battery modules of Examples 1 to 4 may be formed in a range between the lower limit module stiffness curve C1b having a slope (Sb) value of 0.00417 MPa/% and the upper limit module stiffness curve C1a having a slope (Sa) value of 0.225 MPa/%.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present disclosure described above can be mounted together with various control and protection systems such as a BMS(battery management system), a BDU(battery disconnect unit), and a cooling system to form a battery pack.

The battery pack can be applied to various devices. For example, it can be applied to vehicle means such as an electric bike, an electric vehicle, and a hybrid electric vehicle, or an ESS (Energy Storage System) and may be applied to various devices capable of using a secondary battery, without being limited thereto.

Although the invention has been described in detail with reference to preferred embodiments of the present disclosure, the scope of the present disclosure is not limited thereto, and various modifications and improvements can be made by those skilled in the art using the basic concepts of the present disclosure, which are defined in the appended claims.

### [Description of Reference Numerals]

100, 100t, 100s: battery module
110: battery cell
210: first side plate
220: second side plate
600: connection member
700A: upper heat sink
700B: lower heat sink
1000: battery pack
1100: pack tray

## Claims

1. A battery pack comprising:
a battery module (100, 100t, 100s) which includes a battery cell stack (120) in which a plurality of battery cells (110) are stacked, first and second side plates (210, 220) positioned on both side surfaces of the battery cell stack (120), and connection members (600) disposed on an upper part and a lower part of the battery cell stack (120) and connecting the first and second side plates (210, 220);
a pack tray (1100) which houses the battery module (100, 100t, 100s); and
a heat sink (700A, 700B) including at least one cooling part (710) through which coolant flows,
wherein the heat sink (700A, 700B) includes at least either one of an upper heat sink (700A) positioned in an upper part of the battery module (100, 100t, 100s) or a lower heat sink (700B) positioned in a lower part of the battery module (100, 100t, 100s),
wherein the first and second side plates (210, 220) are fixed to the pack tray (1100), and
wherein the cooling part (710) of the upper heat sink (700A) is positioned on one side of the connection member (600) in the upper part of the battery module (100, 100t, 100s), and the cooling part (710) of the lower heat sink (700B) is positioned at one side of the connection member (600) in the lower part of the battery module (100, 100t, 100s),
wherein:
a plurality of connection members (600) are provided on at least either one of the upper side or the lower side of the battery cell stack (120), and
the connection members (600) are positioned to be spaced apart from each other along a direction perpendicular to a stacking direction in which the battery cells (110) are stacked,
**characterized in that**:
the cooling part (710) is disposed in a space between the connection members (600) spaced apart from each other, such that increase in height of the battery module is minimized.

2. The battery pack of claim 1, wherein:
the battery module (100, 100t, 100s) is formed in a plurality of numbers,
at least two battery modules (100, 100t, 100s) are disposed along a stacking direction in which the battery cells (110) are stacked, and
wherein the cooling part (710) passes one side of the connection member (600) of one battery module (100, 100t, 100s), and passes one side of the connection member (600) of the other battery module (100, 100t, 100s) adjacent to the one battery module (100, 100t, 100s).

3. The battery pack of claim 1, wherein:
the cooling part (710) includes a first cooling part (711) and a second cooling part (712) that extend along one direction, and
the upper heat sink (700A) and the lower heat sink (700B) each further comprise an inflow part (720) that is connected to the first cooling part (711) and introduces a coolant, a discharge part (730) that is connected to the second cooling part (712) and discharges the coolant, and a connection part (740) that connects the first cooling part (711) and the second cooling part (712).

4. The battery pack of claim 3, wherein:
the coolant flows along the inflow part (720), the first cooling part (711), the connection part (740), the second cooling part (712) and the discharge part (730), and forms a circulation structure.

5. The battery pack of claim 3, wherein:
the one direction is a direction parallel to the stacking direction in which the battery cells (110) are stacked.

6. The battery pack of claim 3, wherein:
based on the battery module (100, 100t, 100s), the inflow part (720) and the discharge part (730) are positioned on the same side, and the connection part (740) is positioned on an opposite side of the inflow part (720) and the discharge part (730).

7. The battery pack of claim 1, wherein:
the battery module (100, 100t, 100s) further comprises a thermal resin layer (900) positioned between the cooling part (710) and the battery cell stack (120), and
wherein the thermal resin layer (900) includes at least either one of an upper thermal resin layer (900A) positioned between the cooling part (710) of the upper heat sink (700A) and the battery cell stack (120), or a lower thermal resin layer (900B) positioned between the cooling part (710) of the lower heat sink (700B) and the battery cell stack (120).

8. The battery pack of claim 1, wherein:
the first and second side plates (210, 220) each include a support part (200S) that supports the outermost battery cell (110) of the battery cell stack (120) and is disposed so as to be perpendicular to the bottom part (1100F) of the pack tray (1100), and a fixing part (200F) that protrudes in a direction perpendicular to one surface of the support part (200S), and
the fixing part (200F) is fixed to the pack tray (1100).

9. The battery pack of claim 8, wherein:
the pack tray (1100) includes a mounting beam (1200) disposed on an upper surface of the bottom part (1100F) of the pack tray (1100), and
the fixing part (200F) is fixed to the mounting beam (1200).

10. The battery pack of claim 1, wherein:
the battery cell stack (120) includes a first battery cell stack (120a) and a second battery cell stack (120b), and
the first battery cell stack (120a) and the second battery cell stack (120b) are disposed to be spaced apart from each other along a direction perpendicular to a stacking direction in which the battery cells (110) are stacked.

11. The battery pack of claim 10, wherein:
the first side plate (210) extends so as to cover both one side surface of the first battery cell stack (120a) and one side surface of the second battery cell stack (120b), and
the second side plate (220) extends so as to cover both the other side surface of the first battery cell stack (120a) and the other side surface of the second battery cell stack (120b).

12. The battery pack of claim 10, wherein:
the upper heat sink (700A) and the lower heat sink (700B) each include a plurality of cooling parts (711, 712),
the cooling parts (711, 712) of the upper heat sink (700A) are disposed on one side or both sides of the connection member (600) in the upper part of the first battery cell stack (120a) and the second battery cell stack (120b), and
the cooling parts (711, 712) of the lower heat sink (700B) are disposed on one side or both sides of the connection member (600) in the lower part of the first battery cell stack (120a) and the lower part of the second battery cell stack (120b).

13. The battery pack of claim 1, wherein:
the battery cells (110) are stacked along one direction from the first side plate (210) to the second side plate (220),
a compression pad is interposed at least at one place between adjacent battery cells (110), between one of the outermost battery cells (110) and the first side plate (210), or between the other one of the outermost battery cells (110) and the second side plate (220),
in an EOL (End of Life) state, a deformation ratio in the direction in which the battery cells (110) are stacked is 12% or less, and a surface pressure applied to the battery cells (110) is 0.9 MPa or less,
wherein a module stiffness curve of the battery module (100, 100t, 100s) is calculated in a slope (MPa/%) range of 0.00417 or more and 0.225 or less,
a module stiffness curve of the battery module (100, 100t, 100s) corresponds to a relationship between the deformation ratio of the first and second side plates (210, 220) and the surface pressure applied to the first and second side plates (210, 220), and
wherein the module stiffness curve of the battery module (100, 100t, 100s) is derived by reflecting the degree of compression of the compression pad relative to the surface pressure applied to the compression pads and the number of the compression pad, on the frame stiffness curve of the first and second side plates (210, 220).

## Patentansprüche

1. Batteriepack, umfassend:
ein Batteriemodul (100, 100t, 100s), das einen Batteriezellenstapel (120), in dem eine Vielzahl von Batteriezellen (110) gestapelt sind, eine erste und eine zweite Seitenplatte (210, 220), die auf beiden Seitenflächen des Batteriezellenstapels (120) posi/oniert sind, und Verbindungselemente (600) umfasst, die an einem Oberteil und einem Unterteil des Batteriezellenstapels (120) angeordnet sind und die erste und die zweite Seitenplatte (210, 220) verbinden;
ein Pack-Aufnahmefach (1100), welches das Batteriemodul (100, 100t, 100s) aufnimmt; und
einen Kühlkörper (700A, 700B), der mindestens ein Kühlteil (710) umfasst, durch das Kühlmittel fließt,
wobei der Kühlkörper (700A, 700B) mindestens eines aus einem oberen Kühlkörper (700A), der in einem Oberteil des Batteriemoduls (100, 100t, 100s) posi/oniert ist, oder einem unteren Kühlkörper (700B), der in einem Unterteil des Batteriemoduls (100, 100t, 100s) posi/oniert ist, umfasst,
wobei die erste und die zweite Seitenplatte (210, 220) an dem Pack-Aufnahmefach (1100) befes/gt sind, und
wobei das Kühlteil (710) des oberen Kühlkörpers (700A) auf einer Seite des Verbindungselements (600) im Oberteil des Batteriemoduls (100, 100t, 100s) posi/oniert ist, und das Kühlteil (710) des unteren Kühlkörpers (700B) auf einer Seite des Verbindungselements (600) im Unterteil des Batteriemoduls (100, 100t, 100s) posi/oniert ist,
wobei
eine Vielzahl von Verbindungselementen (600) an mindestens einer aus Oberseite oder Unterseite des Batteriezellenstapels (120) vorgesehen ist, und
die Verbindungselemente (600) so posi/oniert sind, dass sie entlang einer Richtung senkrecht zu einer Stapelrichtung, in der die Batteriezellen (110) gestapelt sind, voneinander beabstandet sind,
**dadurch gekennzeichnet, dass**
das Kühlteil (710) in einem Raum zwischen den voneinander beabstandeten Verbindungselementen (600) angeordnet ist, so dass eine Zunahme der Bauhöhe des Batteriemoduls minimiert wird.

2. Batteriepack nach Anspruch 1, wobei
das Batteriemodul (100, 100t, 100s) in einer Vielzahl von Exemplaren ausgebildet ist,
mindestens zwei Batteriemodule (100, 100t, 100s) entlang einer Stapelrichtung angeordnet sind, in der die Batteriezellen (110) gestapelt sind, und
wobei das Kühlteil (710) an einer Seite des Verbindungselements (600) eines Batteriemoduls (100, 100t, 100s) vorbeiführt und an einer Seite des Verbindungselements (600) des anderen Batteriemoduls (100, 100t, 100s), das dem einen Batteriemodul (100, 100t, 100s) benachbart ist, vorbeiführt.

3. Batteriepack nach Anspruch 1, wobei
das Kühlteil (710) ein erstes Kühlteil (711) und ein zweites Kühlteil (712) umfasst, die sich entlang einer Richtung erstrecken, und
der obere Kühlkörper (700A) und der untere Kühlkörper (700B) jeweils ferner ein Einlassteil (720), das mit dem ersten Kühlteil (711) verbunden ist und ein Kühlmittel einleitet, ein Auslassteil (730), das mit dem zweiten Kühlteil (712) verbunden ist und das Kühlmittel auslässt, und ein Verbindungsteil (740), das das erste Kühlteil (711) und das zweite Kühlteil (712) verbindet, umfassen.

4. Batteriepack nach Anspruch 3, wobei
das Kühlmittel entlang des Einlassteils (720), des ersten Kühlteils (711), des Verbindungsteils (740), des zweiten Kühlteils (712) und des Auslassteils (730) fließt und eine Zirkula/onsstruktur bildet.

5. Batteriepack nach Anspruch 3, wobei
die eine Richtung eine Richtung parallel zur Stapelrichtung ist, in der die Batteriezellen (110) gestapelt sind.

6. Batteriepack nach Anspruch 3, wobei
das Einlassteil (720) und das Auslassteil (730) bezogen auf das Batteriemodul (100, 100t, 100s) auf derselben Seite posi/oniert sind und das Verbindungsteil (740) auf einer gegenüberliegenden Seite des Einlassteils (720) und des Auslassteils (730) posi/oniert ist.

7. Batteriepack nach Anspruch 1, wobei
das Batteriemodul (100, 100t, 100s) ferner eine Thermoharzschicht (900) umfasst, die zwischen dem Kühlteil (710) und dem Batteriezellenstapel (120) posi/oniert ist, und
wobei die Thermoharzschicht (900) mindestens eine aus einer oberen Thermoharzschicht (900A), die zwischen dem Kühlteil (710) des oberen Kühlkörpers (700A) und dem Batteriezellenstapel (120) posi/oniert ist, oder einer unteren Thermoharzschicht (900B), die zwischen dem Kühlteil (710) des unteren Kühlkörpers (700B) und dem Batteriezellenstapel (120) posi/oniert ist, umfasst.

8. Batteriepack nach Anspruch 1, wobei
die erste und die zweite Seitenplatte (210, 220) jeweils ein Stützteil (2005) umfassen, das die äußerste Batteriezelle (110) des Batteriezellenstapels (120) stützt und so angeordnet ist, dass es senkrecht zum Bodenteil (1100F) des Pack-Aufnahmefachs (1100) verläuft, und ein Befestigungsteil (200F), das in einer Richtung senkrecht zu einer Fläche des Stützteils (200S) vorsteht, und
das Befestigungsteil (200F) an dem Pack-Aufnahmefach (1100) befestigt ist.

9. Batteriepack nach Anspruch 8, wobei
das Pack-Aufnahmefach (1100) einen Montageträger (1200) umfasst, der auf einer oberen Fläche des Bodenteils (1100F) des Pack-Aufnahmefachs (1100) angeordnet ist, und
das Befestigungsteil (200F) am Montageträger (1200) befestigt ist.

10. Batteriepack nach Anspruch 1, wobei
der Batteriezellenstapel (120) einen ersten Batteriezellenstapel (120a) und einen zweiten Batteriezellenstapel (120b) umfasst, und
der erste Batteriezellenstapel (120a) und der zweite Batteriezellenstapel (120b) so angeordnet sind, dass sie entlang einer Richtung senkrecht zu einer Stapelrichtung, in der die Batteriezellen (110) gestapelt sind, voneinander beabstandet sind.

11. Batteriepack nach Anspruch 10, wobei
die erste Seitenplatte (210) sich so erstreckt, dass sie sowohl eine Seitenfläche des ersten Batteriezellenstapels (120a) als auch eine Seitenfläche des zweiten Batteriezellenstapels (120b) bedeckt, und
die zweite Seitenplatte (220) sich so erstreckt, dass sie sowohl die andere Seitenfläche des ersten Batteriezellenstapels (120a) als auch die andere Seitenfläche des zweiten Batteriezellenstapels (120b) bedeckt.

12. Batteriepack nach Anspruch 10, wobei
der obere Kühlkörper (700A) und der untere Kühlkörper (700B) jeweils eine Vielzahl von Kühlteilen (711, 712) umfassen,
die Kühlteile (711, 712) des oberen Kühlkörpers (700A) auf einer Seite oder beiden Seiten des Verbindungselements (600) im Oberteil des ersten Batteriezellenstapels (120a) und des zweiten Batteriezellenstapels (120b) angeordnet sind, und
die Kühlteile (711, 712) des unteren Kühlkörpers (700B) auf einer Seite oder beiden Seiten des Verbindungselements (600) im Unterteil des ersten Batteriezellenstapels (120a) und im Unterteil des zweiten Batteriezellenstapels (120b) angeordnet sind.

13. Batteriepack nach Anspruch 1, wobei
die Batteriezellen (110) entlang einer Richtung von der ersten Seitenplatte (210) zur zweiten Seitenplatte (220) gestapelt sind,
ein Kompressionspad an mindestens einer Stelle zwischen benachbarten Batteriezellen (110), zwischen einer der äußersten Batteriezellen (110) und der ersten Seitenplatte (210) oder zwischen der anderen der äußersten Batteriezellen (110) und der zweiten Seitenplatte (220) eingefügt ist,
in einem EOL-Zustand (Ende der Lebensdauer) ein Verformungsverhältnis in der Richtung, in der die Batteriezellen (110) gestapelt sind, 12 % oder weniger beträgt und ein auf die Batteriezellen (110) ausgeübter Oberflächendruck 0,9 MPa oder weniger beträgt,
wobei eine Modulsteifigkeitskurve des Batteriemoduls (100, 100t, 100s) in einem Steigungsbereich (MPa/%) von 0,00417 oder mehr und 0,225 oder weniger berechnet wird,
eine Modulsteifigkeitskurve des Batteriemoduls (100, 100t, 100s) einer Beziehung zwischen dem Verformungsverhältnis der ersten und der zweiten Seitenplatte (210, 220) und dem auf die erste und die zweite Seitenplatte (210, 220) ausgeübten Oberflächendruck entspricht, und
wobei die Modulsteifigkeitskurve des Batteriemoduls (100, 100t, 100s) durch Abbildung des Kompressionsgrads des Kompressionspads im Verhältnis zum auf die Kompressionspads ausgeübten Oberflächendruck und der Anzahl des Kompressionspads auf der Rahmensteifigkeitskurve der ersten und der zweiten Seitenplatte (210, 220) abgeleitet wird.

## Revendications

1. Bloc-batterie comprenant :
un module de batterie (100, 100t, 100s) qui inclut un empilement de cellules de batterie (120) dans lequel une pluralité de cellules de batterie (110) sont empilées, des première et seconde plaques latérales (210, 220) positionnées sur les deux surfaces latérales de l'empilement de cellules de batterie (120), et des éléments de connexion (600) disposés sur une partie supérieure et une partie inférieure de l'empilement de cellules de batterie (120) et reliant les première et seconde plaques latérales (210, 220) ;
un plateau de bloc (1100) qui loge le module de batterie (100, 100t, 100s) ; et
un dissipateur thermique (700A, 700B) incluant au moins une partie de refroidissement (710) à travers laquelle s'écoule un liquide de refroidissement,
dans lequel le dissipateur thermique (700A, 700B) inclut au moins l'un ou l'autre d'un dissipateur thermique supérieur (700A) positionné dans une partie supérieure du module de batterie (100, 100t, 100s) ou d'un dissipateur thermique inférieur (700B) positionné dans une partie inférieure du module de batterie (100, 100t, 100s),
dans lequel les première et seconde plaques latérales (210, 220) sont fixées au plateau de bloc (1100), et
dans lequel la partie de refroidissement (710) du dissipateur thermique supérieur (700A) est positionnée sur un côté de l'élément de connexion (600) dans la partie supérieure du module de batterie (100, 100t, 100s), et la partie de refroidissement (710) du dissipateur thermique inférieur (700B) est positionnée sur un côté de l'élément de connexion (600) dans la partie inférieure du module de batterie (100, 100t, 100s),
dans lequel :
une pluralité d'éléments de connexion (600) sont prévus sur au moins l'un ou l'autre du côté supérieur ou du côté inférieur de l'empilement de cellules de batterie (120), et
les éléments de connexion (600) sont positionnés de manière à être espacés les uns des autres le long d'une direction perpendiculaire à une direction d'empilement dans laquelle les cellules de batterie (110) sont empilées,
**caractérisé en ce que** :
la partie de refroidissement (710) est disposée dans un espace entre les éléments de connexion (600) espacés les uns des autres, de telle sorte que l'augmentation de la hauteur du module de batterie est minimisée.

2. Le bloc-batterie selon la revendication 1, dans lequel :
le module de batterie (100, 100t, 100s) est formé en une pluralité d'exemplaires,
au moins deux modules de batterie (100, 100t, 100s) sont disposés le long d'une direction d'empilement dans laquelle les cellules de batterie (110) sont empilées, et
dans lequel la partie de refroidissement (710) passe sur un côté de l'élément de connexion (600) d'un module de batterie (100, 100t, 100s), et passe sur un côté de l'élément de connexion (600) de l'autre module de batterie (100, 100t, 100s) adjacent à l'un module de batterie (100, 100t, 100s).

3. Le bloc-batterie selon la revendication 1, dans lequel :
la partie de refroidissement (710) inclut une première partie de refroidissement (711) et une seconde partie de refroidissement (712) qui s'étendent le long d'une direction, et
le dissipateur thermique supérieur (700A) et le dissipateur thermique inférieur (700B) comprennent chacun en outre une partie d'entrée (720) qui est connectée à la première partie de refroidissement (711) et introduit un liquide de refroidissement, une partie de décharge (730) qui est connectée à la seconde partie de refroidissement (712) et décharge le liquide de refroidissement, et une partie de connexion (740) qui connecte la première partie de refroidissement (711) et la seconde partie de refroidissement (712).

4. Le bloc-batterie selon la revendication 3, dans lequel :
le liquide de refroidissement s'écoule le long de la partie d'entrée (720), de la première partie de refroidissement (711), de la partie de connexion (740), de la seconde partie de refroidissement (712) et de la partie de décharge (730), et forme une structure de circulation.

5. Le bloc-batterie selon la revendication 3, dans lequel :
l'une direction est une direction parallèle à la direction d'empilement dans laquelle les cellules de batterie (110) sont empilées.

6. Le bloc-batterie selon la revendication 3, dans lequel :
sur la base du module de batterie (100, 100t, 100s), la partie d'entrée (720) et la partie de décharge (730) sont positionnées du même côté, et la partie de connexion (740) est positionnée sur un côté opposé de la partie d'entrée (720) et de la partie de décharge (730).

7. Le bloc-batterie selon la revendication 1, dans lequel :
le module de batterie (100, 100t, 100s) comprend en outre une couche de résine thermique (900) positionnée entre la partie de refroidissement (710) et l'empilement de cellules de batterie (120), et
dans lequel la couche de résine thermique (900) inclut au moins l'une ou l'autre d'une couche de résine thermique supérieure (900A) positionnée entre la partie de refroidissement (710) du dissipateur thermique supérieur (700A) et l'empilement de cellules de batterie (120), ou d'une couche de résine thermique inférieure (900B) positionnée entre la partie de refroidissement (710) du dissipateur thermique inférieur (700B) et l'empilement de cellules de batterie (120).

8. Le bloc-batterie selon la revendication 1, dans lequel :
les première et seconde plaques latérales (210, 220) incluent chacune une partie de support (200S) qui supporte la cellule de batterie la plus à l'extérieur (110) de l'empilement de cellules de batterie (120) et est disposée de manière à être perpendiculaire à la partie inférieure (1100F) du plateau de bloc (1100), et une partie de fixation (200F) qui fait saillie dans une direction perpendiculaire à une surface de la partie de support (200S), et
la partie de fixation (200F) est fixée au plateau de bloc (1100).

9. Le bloc-batterie selon la revendication 8, dans lequel :
le plateau de bloc (1100) inclut une poutre de montage (1200) disposée sur une surface supérieure de la partie inférieure (1100F) du plateau de bloc (1100), et
la partie de fixation (200F) est fixée à la poutre de montage (1200).

10. Le bloc-batterie selon la revendication 1, dans lequel :
l'empilement de cellules de batterie (120) inclut un premier empilement de cellules de batterie (120a) et un second empilement de cellules de batterie (120b), et
le premier empilement de cellules de batterie (120a) et le second empilement de cellules de batterie (120b) sont disposés de manière à être espacés l'un de l'autre le long d'une direction perpendiculaire à une direction d'empilement dans laquelle les cellules de batterie (110) sont empilées.

11. Le bloc-batterie selon la revendication 10, dans lequel :
la première plaque latérale (210) s'étend de manière à couvrir à la fois une surface latérale du premier empilement de cellules de batterie (120a) et une surface latérale du second empilement de cellules de batterie (120b), et
la seconde plaque latérale (220) s'étend de manière à couvrir à la fois l'autre surface latérale du premier empilement de cellules de batterie (120a) et l'autre surface latérale du second empilement de cellules de batterie (120b).

12. Le bloc-batterie selon la revendication 10, dans lequel :
le dissipateur thermique supérieur (700A) et le dissipateur thermique inférieur (700B) incluent chacun une pluralité de parties de refroidissement (711, 712),
les parties de refroidissement (711, 712) du dissipateur thermique supérieur (700A) sont disposées sur un côté ou les deux côtés de l'élément de connexion (600) dans la partie supérieure du premier empilement de cellules de batterie (120a) et du second empilement de cellules de batterie (120b), et
les parties de refroidissement (711, 712) du dissipateur thermique inférieur (700B) sont disposées sur un côté ou les deux côtés de l'élément de connexion (600) dans la partie inférieure du premier empilement de cellules de batterie (120a) et la partie inférieure du second empilement de cellules de batterie (120b).

13. Le bloc-batterie selon la revendication 1, dans lequel :
les cellules de batterie (110) sont empilées le long d'une direction depuis la première plaque latérale (210) vers la seconde plaque latérale (220),
un tampon de compression est interposé au moins à un endroit entre des cellules de batterie adjacentes (110), entre l'une des cellules de batterie les plus à l'extérieur (110) et la première plaque latérale (210), ou entre l'autre des cellules de batterie les plus à l'extérieur (110) et la seconde plaque latérale (220),
dans un état EOL (fin de vie), un taux de déformation dans la direction dans laquelle les cellules de batterie (110) sont empilées est de 12 % ou moins, et une pression de surface appliquée aux cellules de batterie (110) est de 0,9 MPa ou moins,
dans lequel une courbe de rigidité du module du module de batterie (100, 100t, 100s) est calculée dans une plage de pente (MPa/%) de 0,00417 ou plus et 0,225 ou moins,
une courbe de rigidité du module du module de batterie (100, 100t, 100s) correspond à une relation entre le taux de déformation des première et seconde plaques latérales (210, 220) et la pression de surface appliquée aux première et seconde plaques latérales (210, 220), et
dans lequel la courbe de rigidité du module du module de batterie (100, 100t, 100s) est dérivée en reflétant le degré de compression du tampon de compression par rapport à la pression de surface appliquée aux tampons de compression et le nombre du tampon de compression, sur la courbe de rigidité du châssis des première et seconde plaques latérales (210, 220).
